# EUROPÄISCHE PATENTSCHRIFT

(11) **EP 1 575 828 B1**
(45) Veröffentlichungstag und Bekanntmachung des Hinweises auf die Patenterteilung: **23.07.2008**
(21) Anmeldenummer: 03779547.3
(22) Anmeldetag: 18.12.2003
(51) Int. Cl.: B64C 39/00, B64C 29/00

(54) **FLUGGERÄT**
AIRCRAFT
AERONEF

(30) Priorität: 18.12.2002 AT 18952002; 05.05.2003 AT 6732003
(43) Veröffentlichungstag der Anmeldung: 21.09.2005
(73) Patentinhaber: IAT 21 Innovative Aeronautics Technologies GmbH, 4040 Linz (AT)
(72) Erfinder: SCHWAIGER, Meinhard, A-4040 LINZ (AT); FEICHTNER, Wolfgang, A-4020 LINZ (AT)
(74) Vertreter: Babeluk, Michael
(86) Internationale Anmeldenummer: PCT/AT2003/000371
(87) Internationale Veröffentlichungsnummer: WO 2004/054875

(56) Entgegenhaltungen:
- GB-A- 885 663
- US-A- 1 761 053
- US-A- 2 037 377
- US-A- 3 801 047
- US-A- 5 407 150
- US-A- 6 007 021

## Beschreibung

Die vorliegende Erfindung betrifft ein Fluggerät gemäß dem Oberbegriff von Patentanspruch 1.

Insbesondere ist ein solches Fluggerät mit einem System spezieller Auftriebskörper versehen, die als Rotoren ausgebildet sind, mit einer Drehachse die im Wesentlichen parallel zur Längsachse des Fluggerätes angeordnet ist. Dabei ist jeder Rotor mit einer bestimmten Anzahl tragflügelähnlicher Rotorblätter versehen, die im wesentlichen an zwei scheibenähnlichen Endkörpern derart angeordnet sind, dass während einer vollen Umdrehung des Auftriebskörpers (Rotors) die Mittelachse des Rotorblattes eine Kreisbewegung mit dem Abstand von der Drehachse als Radius ausführt, und das Rotorblatt vorzugsweise während einer vollen Umdrehung individuell in seiner Lage verändert werden kann. Damit kann in jeder augenblicklichen Position des Rotorblattes eine definierte Krafteinwirkung (z. B. Auftriebskraft, Querkraft) auf das Fluggerät erzeugt werden.

Es sind vielfache Anstrengungen unternommen worden, die Vorteile eines Flugzeugs mit denen eines Hubschraubers zu vereinen. Von besonderem Interesse ist dabei die Eigenschaft von Hubschraubern, senkrecht starten und landen zu können, oder auch bei Bedarf in der Luft stillstehen zu können, um beispielsweise Personen zu bergen, bzw. um spezielle Transport- und Montageflugmanöver oder ähnliche Aufgaben zu erfüllen. Nachteilig bei bestehenden Hubschraubern sind, der hohe technische Aufwand, insbesondere im Bereich der Rotorsteuerung, sowie das enorme Absturzrisiko bereits bei geringfügigster Berührung der rotierenden Rotorflügel mit einem Hindernis wie z. B Baumwipfel oder Felswände. Gerade Einsatzbedingungen, wie Alpinbergungen, sind äußerst kritisch, da einerseits eine Position möglichst nahe an z. B. einer Felswand erforderlich wäre, andererseits die geringste Kollision bereits fatale Auswirkungen zur Folge hat; somit kann nur unter Einhaltung entsprechend großer Sicherheitsabstände gearbeitet werden. Ein weiterer Nachteil ist der hohe Treibstoffverbrauch von Hubschraubern, der auch im Reiseflug gegeben ist. Um diese Nachteile zu vermeiden, sind so VTOL- oder STOL-Flugzeuge entwickelt worden, die vom Aufbau her grundsätzlich Flugzeugen ähneln, jedoch durch verschiedene technische Maßnahmen mit der Fähigkeit ausgestattet sind, senkrecht starten und landen zu können, oder zumindest mit extrem kurzen Start- und Landebahnen auskommen.

Eine solche Lösung ist beispielsweise in der EP 0 918 686 A offenbart. Diese Druckschrift beschreibt ein Flugzeug, das Tragflächen aufweist, die im Wesentlichen durch Querstromrotoren gebildet sind. Auf diese Weise ist es möglich, durch entsprechende Strahlumlenkung einen vertikal nach unten gerichteten Luftstrahl zu erzeugen, um den Senkrechtstart des Fluggerätes zu ermöglichen. Für den Reiseflug kann der Schub entsprechend umgelenkt werden.

Nachteilig bei dieser bekannten Lösung ist zum einen, dass die auf die Auftriebserzeugung optimierten Tragflächen einen hohen Luftwiderstand aufweisen, so dass der Treibstoffverbrauch insbesondere bei höheren Fluggeschwindigkeiten übermäßig groß ist und dass das Fluggerät insgesamt eine relativ große Spannweite aufweist. Es benötigt daher viel Platz und ist auch unter beengten Verhältnissen nicht oder nur schlecht einsetzbar.

Weitere Fluggeräte sind in der US 4,519,562 A beschrieben Die Lösung ist aufwendig und besitzt einen geringen Wirkungsgrad, so dass sich ein solches System nicht durchgesetzt hat. Auch die in der US 6,261,051 B beschriebenen Rotoren sind nicht geeignet, ein senkrecht startendes Fluggerät darzustellen, das praxistauglich ist.

Ein weiteres Fluggerät, das Auftrieb unter Verwendung von abgewandelten Querstromventilatoren erzeugt, ist in der DE 196 34 522 A offenbart. Abgesehen von der Frage der nicht unmittelbar ersichtlichen Funktionsfähigkeit eines solchen Fluggerätes sind auch hier die oben beschriebenen Nachteile gegeben.

Ein weiteres Fluggerät mit einem Querstromrotor als Antriebselement ist aus der US 6,016,992 A bekannt. Auch hier ergibt sich durch den Querstromrotor in Flugrichtung eine sehr große Querschnittsfläche, und der Platzbedarf ist ähnlich hoch wie bei den oben beschriebenen Lösungen.

Ein weiteres bekanntes Fluggerät mit der Möglichkeit des Senkrechtstarts ist in der US 3,361,386 A offenbart. Bei diesem Flugzeug sind extrem variable Tragflächen vorgesehen, die mit Öffnungen zum Gasaustritt versehen sind. Durch den systembedingt schlechten Wirkungsgrad eines solchen Systems ist der Treibstoffverbrauch extrem hoch.

Dem Stand der Technik nahe liegend ist auch jenes Antriebskonzept für Wasserfahrzeuge, welches als Voith - Schneider Antrieb bekannt ist. Dieses seit ca. 75 Jahren bekannte Antriebssystem unterscheidet sich im Wesentlichen dadurch, dass die Schwenkbewegung der einzelnen Schaufeln, während einer vollen Umdrehung des Drehkranzes, in einem festen kinematischen Verhältnis zueinander abläuft. Damit ist eine Vorschubkraft immer nur in eine einzige Richtung möglich. Im Unterschied dazu ist bei dem hier vorgestellten erfinderischen rotierenden Auftriebskörper, unabhängig von einer ersten Kraftkomponente, z. B. gleich bleibende vertikale Auftriebskomponente, eine zweite Kraftkomponente in Querrichtung erzeugbar.

Ferner zeigen die US 2,037,377 A und die GB 885 663 A Fluggeräte mit Rotoren, die in Längsrichtung angeordnete Schaufeln aufweisen, die um ihre Achsen schwenkbar angeordnet sind. Das Profil der Schaufeln muss dabei als ein Kompromiss zwischen unterschiedlichen Anströmrichtungen ausgeführt sein, was den Wirkungsgrad entsprechend verringert.

Die gegenständliche Erfindung bezieht sich auf weitere Ausführungsvarianten von VTOL-Fluggeräten, die mit rotierenden Auftriebskörpern ausgerüstet sind, deren Drehachse im Wesentlichen parallel zur Längsachse des Fluggerätes angeordnet ist.

Aufgabe der vorliegenden Erfindung ist es, ein Fluggerät zu schaffen, das einen senkrechten Start und eine senkrechte Landung ermöglicht, das in der Luft einen Schwebezustand einnehmen kann, mit einer Beweglichkeit, die eine langsame Vorwärts-, Rückwärts-, parallele Seitwärtsbewegung nach Backbord oder Steuerbord sowie eine Drehbewegung um die Vertikalachse in bzw. gegen den Uhrzeigersinn ausführen kann, und das gleichzeitig für eine hohe Reisefluggeschwindigkeit geeignet ist. Durch die gewählte Ausbildung der äußeren geometrischen Form des Fluggerätes ist der Übergang von einem Schwebezustand in eine Vorwärtsbewegung mit hoher Reisefluggeschwindigkeit zu gewährleisten. Insbesondere soll dabei eine hohe Treibstoffökonomie erreicht werden, bei vergleichsweise geringem, technischem Aufwand. Ein weiterer Anspruch betrifft die Erfüllung der höchsten sicherheitstechnischen Standards, die dem Fluggerät selbst bei einem Totalausfall der Antriebsmotore eine sichere Landung ermöglichen. Weiters sollen die rotierenden Auftriebskörper mit einer Verkleidung derart geschützt werden, dass das Fluggerät auch sehr nahe an Hindernisse (z. B. Felswand, Hochhauswand) heran manövriert werden kann und dass selbst bei Berührung des Fluggerätes mit einem Hindernis, bedingt durch die gegen Kollision geschützten rotierenden Elemente des Auftriebskörpers, ein Absturz sicher verhindert werden kann. Ein für den Piloten sicheres und kollisionsfreies Verlassen des Fluggerätes mittels Schleudersitz ist ebenfalls möglich, und stellt einen weiteren Anspruch dar. Eine besondere Aufgabe der Erfindung ist es, einen hohen Wirkungsgrad bei der Erzeugung des erforderlichen Auftriebs zu erreichen.

Erfindungsgemäß werden diese Aufgaben durch die Merkmale von Patentanspruch 1 gelöst. Wichtig ist, dass die Auftriebskörper durch mindestens ein Antriebsaggregat angetrieben sind und jeweils eine Zylinderachse aufweisen, die im Wesentlichen parallel zu einer Längsachse des Fluggerätes ist. Dabei ist jeder Rotor mit einer bestimmten Anzahl tragflügelähnlicher Rotorflügel versehen, die im wesentlichen an zwei scheibenähnlichen Endkörpern derart angeordnet sind, dass während einer vollen Umdrehung des Auftriebskörpers (Rotors) die Mittelachse des Rotorblattes eine Kreisbewegung mit dem Abstand von der Drehachse als Radius ausführt, und das Rotorblatt vorzugsweise während einer vollen Umdrehung individuell in seiner Lage verändert werden kann. Damit kann in jeder augenblicklichen Position des Rotorblattes eine definierte Krafteinwirkung (z. B. Auftriebskraft, Querkraft) auf das Fluggerät erzeugt werden. Diese Veränderung der Lage erfolgt, indem der hintere Abschnitt des Rotorblattes unabhängig vom vorderen Abschnitt schwenkbar ist, um so eine jeweils optimale Tragflügelform zu erreichen.

Durch geeignete Wahl der Anordnung der Auftriebskörper im Fluggerät ist zudem der Raum oberhalb der Pilotenkanzel freigehalten, sodass dem Piloten ein sicheres und kollisionsfreies Verlassen des Fluggerätes mittels Schleudersitz möglich ist (dies ist z. B. bei einem Hubschrauber nicht möglich).

Für den militärischen Einsatzbereich bietet diese Anordnung der Auftriebskörper eine weitere Möglichkeit und zwar können für Aufklärungszwecke Radar- bzw. andere optische Geräte auch oberhalb des Fluggerätes angeordnet werden. Mit diesem Fluggerät ist es nicht notwendig eine schützende Geländeformation zu verlassen, ohne zuvor mit einem flexibel mit dem Fluggerät verbundenen Aufklärungsgerät, welches z. B. vertikal oberhalb des im Schwebezustand verharrenden Fluggerätes in die Höhe verbracht und anschließend wieder eingeholt werden kann, das Geschehen hinter der Geländeformation erfasst und beurteilt zu haben.

Die erfindungsgemäße Lösung erlaubt ein Manövrieren des Fluggeräts auch bei niedrigen Geschwindigkeiten oder im Schwebflug, ohne die Drehzahl des Antriebsaggregats verändern zu müssen, da Richtung und Stärke der Auftriebskräfte durch die Steuerung der Rotorblätter in weiten Grenzen variierbar sind. Dadurch wird eine extrem große Wendigkeit erreicht.

Durch die Anordnung der Auftriebskörper parallel zum Rumpf können mehrere Vorteile gleichzeitig erreicht werden. Zum einen können die Auftriebskörper einen relativ großen Durchmesser aufweisen, ohne die Querschnittsfläche in Fortbewegungsrichtung allzu sehr zu erhöhen, wodurch auch im schnellen Reiseflug ein geringer Treibstoffbedarf gegeben ist. Zum anderen ist das erfindungsgemäße Fluggerät äußerst kompakt aufgebaut und benötigt somit nicht nur wenig Platz in einem Hangar oder dergleichen, sondern ist auch extrem wendig. Dies ermöglicht beispielsweise die Landung auf Waldlichtungen oder im inner städtischen Bereich zwischen Bauwerken, wo die Landung eines Hubschraubers aufgrund des vorgegebenen Rotordurchmessers nicht mehr möglich wäre. Überdies sind die als Rotor ausgebildeten Auftriebskörper besonders robust im Aufbau und umfassen im Allgemeinen außer den Rotorblättern selbst keine weiteren beweglichen Teile, so dass der technische Aufwand vertretbar ist. Durch die Anbringung der Auftriebskörper im unmittelbaren Nahbereich des Rumpfes ist die mechanische Beanspruchung der Rotoraufhängungen sehr gering, so dass eine entsprechende Leichtbauweise möglich ist, die wiederum zur Treibstoffersparnis beiträgt.

Eine besonders raumökonomische Anordnung der einzelnen Bauteile ist gegeben, wenn die Auftriebskörper im oberen Bereich des Rumpfes angeordnet sind. Zusätzlich wird dadurch eine besonders aerodynamisch günstige Ausführung erreicht, da der Ansaugbereich völlig frei und unbehindert durch sonstige Bauteile des Fluggerätes angeströmt werden kann.

Eine weitere besonders begünstigte Ausführungsvariante der Erfindung sieht vor, dass die Auftriebskörper durch Gasturbinen gegenläufig angetrieben sind. Ähnlich wie bei Hubschraubern ist auch hier bei Einsatz von Gasturbinen ein besonders günstiges Verhältnis von Leistung zu Eigengewicht gegeben. Ein zusätzlicher Vorteil gegenüber Hubschraubern besteht bei der vorliegenden Erfindung darin, dass die Drehzahlen der rotierenden Auftriebskörper wesentlich höher liegen als die von üblichen Hubschrauberrotoren, so dass sich der bauliche Aufwand für Getriebe wesentlich verringert. Je nach Baugröße, Einsatzzweck und Sicherheitsvorschriften können die beiden Rotoren von einer gemeinsamen Gasturbine angetrieben werden, oder es kann jedem Auftriebskörper eine eigene Gasturbine zugeordnet werden.

Der Wirkungsgrad der Auftriebskörper kann insbesondere dadurch weiter verbessert werden, dass die im Rotor beweglich angeordneten Rotorblätter aus mindestens einer feststehenden Achse und zwei unabhängig voneinander beweglichen Rotorblattsegmenten bestehen, damit die Rotorblattgeometrie in jedem Augenblick in jeder aktuellen Position optimal an die jeweilige Situation angepasst werden kann; damit können sowohl die Auftriebskräfte und Seitenkräfte optimiert und die Widerstandskräfte minimiert werden.

Besonders hohe Reisegeschwindigkeiten können dadurch erreicht werden, dass zusätzliche Triebwerke zur Erzeugung eines Schubs für den Vortrieb des Fluggerätes vorgesehen sind. An sich ist es möglich und grundsätzlich für geringere Reisegeschwindigkeiten auch ausreichend, dass der Vortrieb durch die verstellbaren Rotorflügel der Auftriebskörper erzeugt wird, in dem das Fluggerät in eine nach vorne abgesenkte Lage gebracht wird und aus der resultierenden Auftriebskraft eine Vorschubkraft abgeleitet wird. Die Reisegeschwindigkeit ist jedoch in diesem Fall begrenzt, so dass für höhere Reisegeschwindigkeiten in vorteilhafter Weise zusätzliche Triebwerke eingesetzt werden. Diese können beispielsweise als Mantelstromtriebwerke ausgebildet werden. Der Start- und Landevorgang kann dadurch unterstützt werden, dass die zusätzlichen Triebwerke schwenkbar angeordnet sind. Einerseits kann dadurch die Auftriebskraft erhöht werden, wenn der Triebwerksstrahl senkrecht nach unten gerichtet ist, und andererseits kann durch entsprechende Steuerung des Schwenkwinkels die Manövrierbarkeit zusätzlich erhöht werden.

Der Treibstoffverbrauch beim Senkrechtstart bzw. bei der Landung und beim Schwebeflug wird maßgeblich von der umgesetzten Luftmenge beeinflusst. Es ist daher insbesondere günstig, wenn sich die Auftriebskörper über mindestens 40%, vorzugsweise über mindestens 70% der Länge des Rumpfes erstrecken.

Auf diese Weise ist es möglich, bei vorgegebener Querschnittsfläche eine größtmögliche Auftriebsleistung der Auftriebskörper zu erzielen.

Die Manövrierfähigkeit, insbesondere im Schwebeflug und beim Start bzw. bei der Landung, kann dadurch verbessert werden, dass im Bereich der Luftauslassöffnungen verstellbare Leitschaufeln vorgesehen sind. Bei niedrigen Fluggeschwindigkeiten ist die Möglichkeit der Steuerung durch das Leitwerk stark eingeschränkt, so dass sich eine ausreichende Manövrierbarkeit durch die individuelle Verstellbarkeit der Rotorblätter ergibt. Um eine Rotation des Fluggerätes auch um eine vertikale Achse zu ermöglichen, ist es in diesem Zusammenhang besonders bevorzugt, wenn die verstellbaren Rotorblätter in zwei paarweise gegenläufigen Auftriebskörpern angeordnet sind und aus jeweils zwei Segmenten bestehen, die unabhängig voneinander betätig bar sind. Weitere verstellbare Leitschaufeln, die um eine Querachse des Fluggerätes schwenkbar sind, ermöglichen eine Vorwärts- und Rückwärtsbewegung im Schwebezustand, die besonders fein steuerbar ist.

Weiters ist es besonders bevorzugt, wenn die Auftriebskörper mit einer äußeren Verkleidung als mechanischen Schutz der Rotorblätter gegen eine Kollision mit einem festen Hindernis ausgebildet sind. Dies bedeutet, dass die Verkleidung nicht nur zur Aufnahme der Lagerung der Rotorwelle, sondern auch in mechanisch entsprechend robuster Weise ausgebildet ist, um die Auftriebskörper gegenüber einer Beschädigung zu schützen, wenn das Fluggerät mir geringer Relativgeschwindigkeit eine Kollision mit einem Hindernis erleidet.

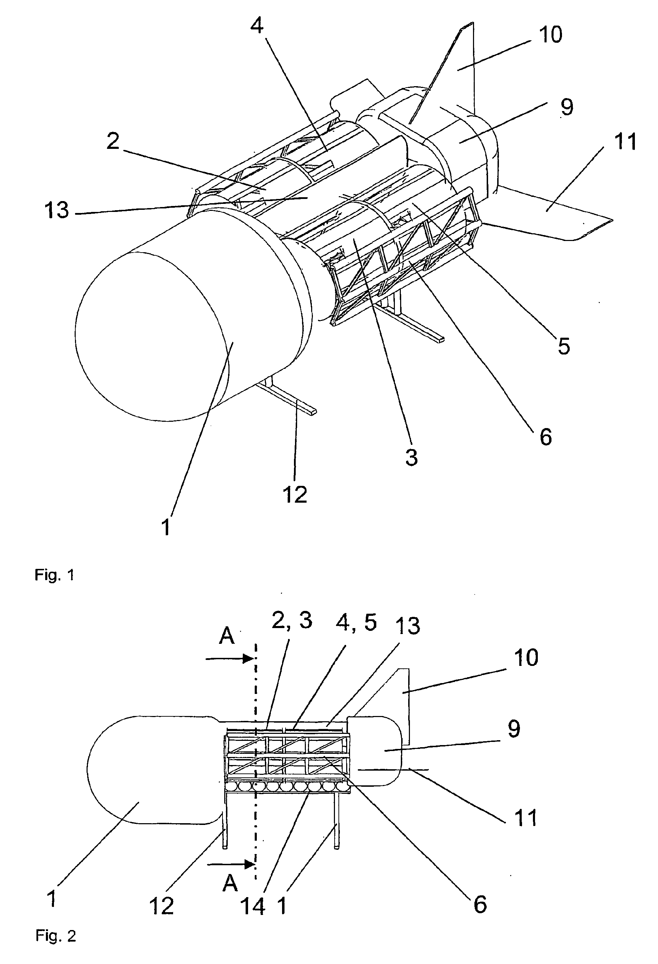

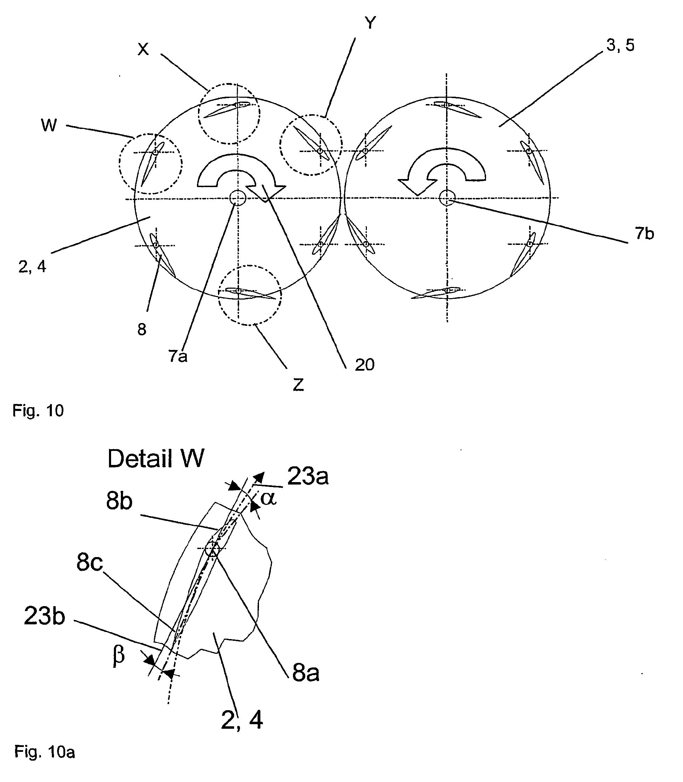

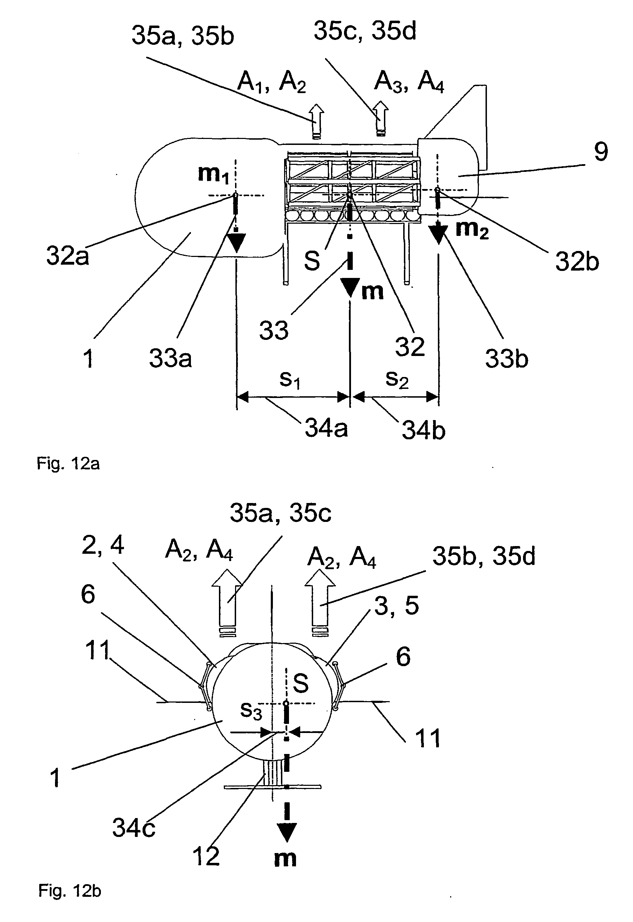

In der Folge wird die vorliegend Erfindung anhand der in den Figuren dargestellten Ausführungsbeispiele näher erläutert. Dabei zeigen Fig. 1 bis 9 und Fig. 11 bis 27 allgemeine Eigenschaften des erfindungsgemäßen Fluggerätes in teilweise schematisierter Form und Fig. 10a bis 10d die wesentlichen Eigenschaften der Erfindung. Im Einzelnen zeigen:
- Fig. 1: eine schematische Ansicht eine ersten Ausführungsvariante eines erfindungsgemäßen Fluggerätes in axonometrischer Darstellung;
- Fig. 2: eine Seitenansicht des Fluggerätes von Fig. 1;
- Fig. 3: einen Schnitt des Fluggerätes von Fig. 1 entlang der Linie A - A in Fig. 2;
- Fig. 4: einen Schnitt des Fluggerätes von Fig. 1 entlang der Linie A - A in Fig. 2 mit der Darstellung einer geöffneten bzw. geschlossenen Verkleidung der Auftriebskörper, wie sie für eine hohe Reisegeschwindigkeit vorgesehen sind;
- Fig. 5: eine Ansicht des Fluggerätes von Fig. 1 von vorne;
- Fig. 6: eine Ansicht des Fluggerätes von Fig. 1 von oben;
- Fig. 7: und Fig. 7b schematisch einen Auftriebskörper des Fluggerätes von Fig. 1;
- Fig. 8,: Fig. 8a und Fig. 8b die Anordnung, Drehrichtung und Wirkungsweise des Auftriebskörpers des Fluggerätes von Fig. 1;
- Fig. 9,: Fig. 9a und Fig. 9b ein Rotorblatt mit zwei beweglichen Segmenten im Querschnitt in der Stellung Auftriebskräfte neutral, maximaler Auftrieb und negativer Auftrieb des Fluggerätes von Fig. 1;
- Fig. 10,: Fig. 10a, Fig. 10b, Fig. 10c und Fig. 10d Rotorblätter-Anstellungen in ausgewählten Positionen entlang der Drehrichtung des Auftriebskörpers des Fluggerätes von Fig. 1;
- Fig. 11: die einzelnen Auftriebskräfte der Auftriebskörper zur Erzielung eines stabilen Gleichgewichtes in der Luft des Fluggerätes von Fig. 1;
- Fig. 12a: und Fig. 12b die Lage der Einzel- und Gesamtmassenschwerpunkte des Fluggerätes von Fig. 1;
- Fig. 13: die nach vorne geneigte Lage des Fluggerätes von Fig. 1 zur Erzielung einer Vorwärtsantriebskomponente für eine langsame Vorwärtsbewegung;
- Fig. 14,: Fig. 14a, Fig. 14b, Fig. 14c und Fig. 14d die Auftriebskörperanordnung und die Anstellung der Rotorblätter zur Erzeugung von Seitenkräften für die Querbewegung des Fluggerätes von Fig. 1;
- Fig. 15: die Erzeugung einer paarweise gegensinnig wirkenden Kraftkomponente quer zur Längsachse des Fluggerätes zur Erzeugung einer Drehbewegung des Fluggerätes um die Vertikalachse;
- Fig. 16,: Fig. 16a, Fig. 16b und Fig. 16c eine besondere Variante eines Auftriebskörpers mit "doppelter" Länge und schränk baren Rotorblättern zur Erzeugung unterschiedlicher Auftriebs- bzw. Querkräfte des Fluggerätes von Fig. 1;
- Fig. 17: die Anstellung der Rotorblätter während eines Sinkfluges im freien Fall zwecks Autorotation des Auftriebskörpers z. B. nach einem Motorausfall des Fluggerätes von Fig. 1;
- Fig. 18: und Fig. 18a bis Fig. 18g eine Ausführungsvariante eines Fluggerätes mit nur zwei Auftriebskörpern, die gegenläufig angetrieben, hintereinander in einer Mittelachse des Fluggerätes angeordnet sind;
- Fig. 19,: Fig. 19a und Fig. 19b eine Ausführungsvariante eines Fluggerätes mit einem System gegenläufiger Querstromrotore mit einer gemeinsamen Drehachse;
- Fig. 20: eine schematische Ansicht eines erfindungsgemäßen Fluggerätes mit der Anordnung eines mit dem Fluggerät flexibel verbundenen Aufklärungsgerätes;
- Fig. 21: eine weitere Ausführungsvariante der Erfindung in einer Darstellung von vorne;
- Fig. 22: die Ausführungsvariante von Fig. 21 von oben;
- Fig. 23: die Ausführungsvariante von Fig. 21 in einer axonometrischen Darstellung;
- Fig. 24: eine weitere Ausführungsvariante der Erfindung in einer seitlichen Darstellung;
- Fig. 25: die Ausführungsvariante von Fig. 24 von vorne;
- Fig. 26: eine schematische Darstellung zur Erklärung der Ansteuerung der Rotorblätter; und
- Fig. 27: ein Detail von Fig. 26.

Das Fluggerät gemäß Fig. 1 bis Fig. 6 besteht aus einem Rumpf 1 mit einer Längsachse 1a und aus vier parallel zu dieser Längsachse 1a in bevorzugter Weise oberhalb der Schwerpunktlage angeordneten Auftriebskörpern 2, 3, 4 und 5, die von einem Seitenschutz 6 gegen Kollision mit einem festen Hindernis geschützt sind. Im hinteren Bereich 9 befinden sich in an sich bekannter Weise ein Höhenleitwerk 11 und ein Seitenleitwerk 10, vorzugsweise auch das Antriebsaggregat z. B. eine od. zwei Gasturbine(n) und das Getriebe sowie zusätzliche Antriebsaggregate (hier nicht näher dargestellt), ausgeführt als z. B. Mantelstromtriebwerke, die dem Fluggerät eine hohe Reisefluggeschwindigkeit verleihen bzw. bei entsprechender schwenkbarer Ausführung den Start- und Landevorgang unterstützen können. Kufen bzw. ähnliche Standbeine 12 stützen das Fluggerät am Boden ab. Mittels Längsstreben 13, 14, die eine strömungsgünstige Querschnittsform oder eine gewichtsoptimierte Fachwerkskonstruktion aufweisen können, ist der hintere Bereich des Fluggerätes mit dem vorderen Bereich verbunden, weiters ist mit den Längstreben und dem Seitenschutz eine stabile Konstruktion für eine Lagerung (hier nicht näher dargestellt) der Auftriebskörper 2, 3, 4, 5 im mittleren Bereich vorgesehen.

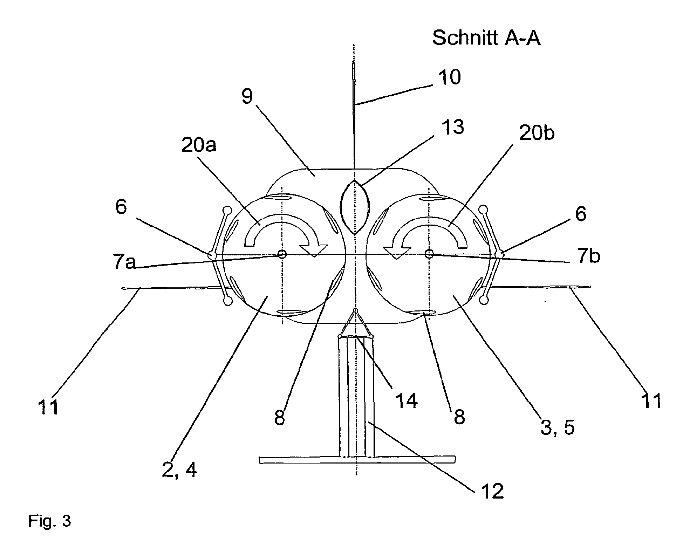

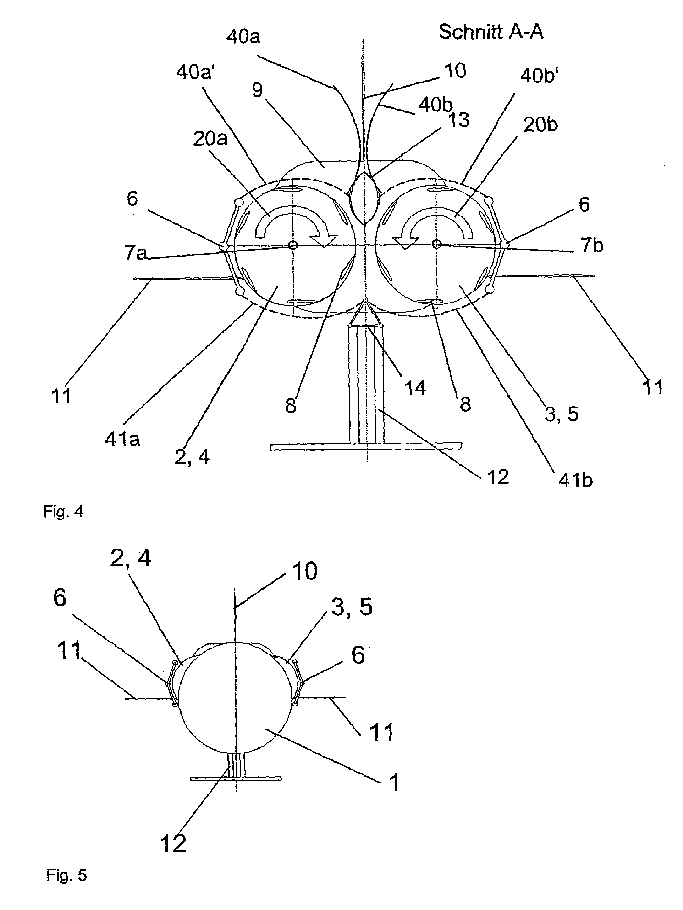

In Fig. 2 sind die Längenverhältnisse ersichtlich, wonach die Länge der rotierenden Auftriebskörper 2, 3, 4, 5 etwa 50 % der Gesamtlänge, vorzugsweise 30 bis 70 %, des Fluggerätes entspricht. In Fig. 3 sind die gegenläufig um die Drehachsen 7a, 7b rotierenden Auftriebskörper 2, 3, 4, 5 mit den Drehrichtungen 20a, 20b und den zur Erzeugung der Auftriebskraft erforderlichen Rotorblättern 8 ersichtlich. Für eine hohe Reisegeschwindigkeit bei gleichzeitiger Treibstoffökonomie, sind die zusätzlichen Antriebsaggregate, hier nicht näher dargestellt, vorgesehen und zur Reduzierung des Luftwiderstandes, werden die Auftriebskörper 2, 3, 4, 5, die bei einer hohen Reisegeschwindigkeit nicht den erforderlichen Auftrieb erzeugen können, mittels geeigneter Verkleidungsschürzen strömungsgünstig im Fluggerät abgedeckt. Gemäß Fig. 4 können diese Verkleidungsschürzen als kompakte Flächen 40a, 40b ausgebildet sein (wie z. B. in Fig. 4 im geöffneten Zustand, für eine optimale Wirkung der Auftriebskörper, dargestellt), bzw. als ein System von Lamellen 40a', 40b', 41a', 41b', die wahlweise zu einer geschlossenen Verkleidung oder für einen ungehinderten Luftdurchlass angestellt werden können.

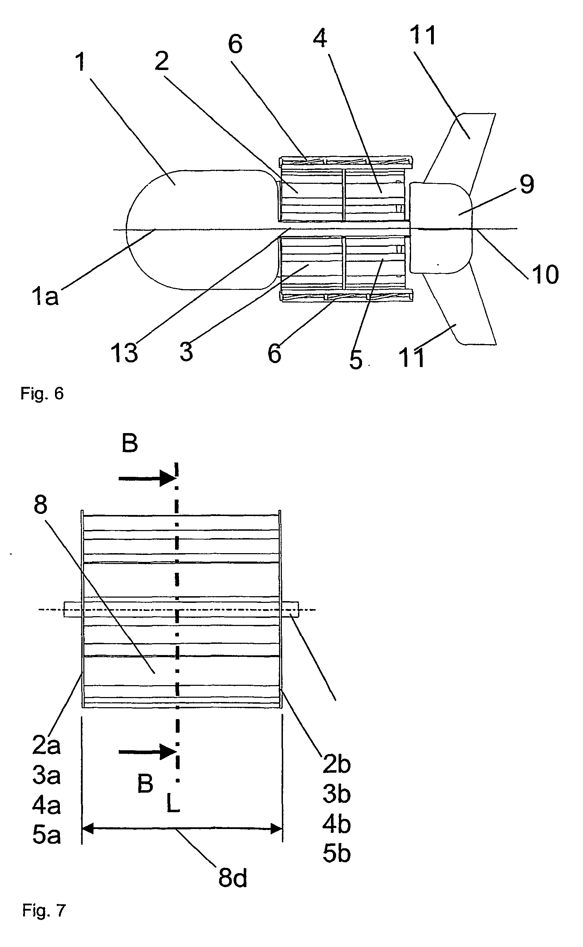

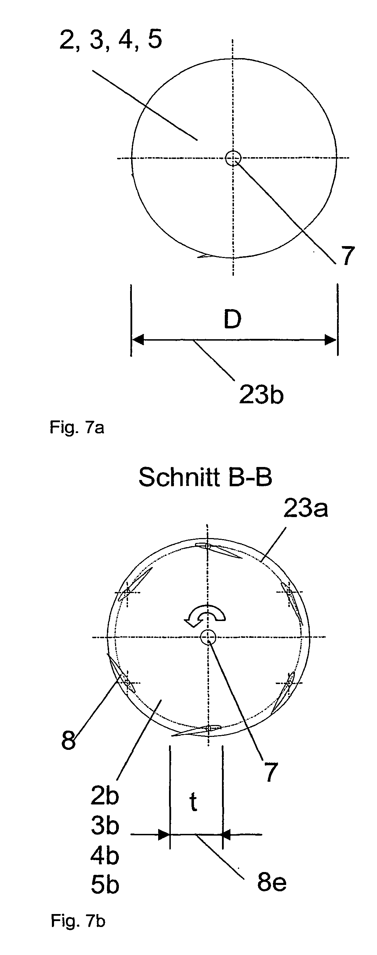

Wie in Fig. 7 dargestellt, besteht ein Auftriebskörper 2, 3, 4, 5 im Wesentlichen aus einer Drehachse 7, aus zwei Endscheiben 2a - 2b, 3a - 3b, 4a - 4b, 5a - 5b mit dem Durchmesser D 23b und einer bestimmten Anzahl (vorzugsweise 4 bis 10) von Rotorblättern 8, die beweglich um eine Schwenkachse 8a in den beiden Endscheiben (z. B. 2a - 2b) angeordnet sind, und bei einer vollen Umdrehung eine Kreisbahn 23a mit dem Radius R 23 beschreiben. Die Tiefe des Rotorblattes t 8e ist Abhängig von der Größenordnung der Gesamtkonstruktion und beträgt ca. 30 bis 50% des Kreisbahnradius R 23, die Länge L 8d des Rotorblattes 8 beträgt vorzugsweise ca. 25 bis 35% der Gesamtlänge des Fluggerätes. Im Betriebszustand rotiert der Auftriebskörper mit Nenndrehzahl (vorzugsweise ca. 750 bis 3000 1/min) um die Drehachse 7, und während einer vollen Umdrehung werden die Rotorblätter 8 in jeder augenblicklichen Position individuell in Bezug auf die Tangente 23b der Kreisbahn 23a mit dem Radius R 23 angestellt, sodass im Bereich der oberen und unteren Extremlage maximale Auftriebskräfte erzeugt werden können und in den beiden vertikalen Extrempositionen ausschließlich Strömungswiderstandskräfte auf das Rotorblatt einwirken. Die bevorzugte Anordnung der Drehrichtung 20 der Auftriebskörper im Fluggerät ist gegenläufig.

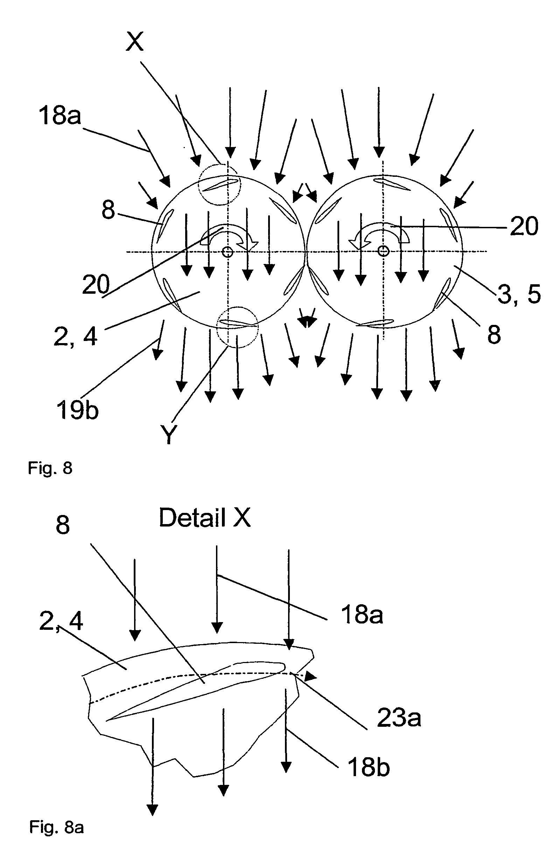

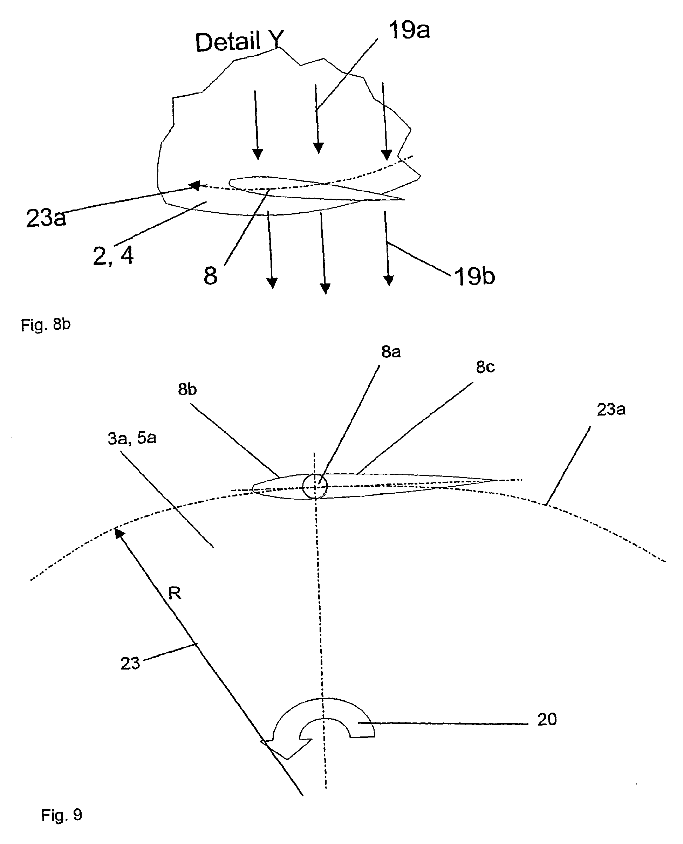

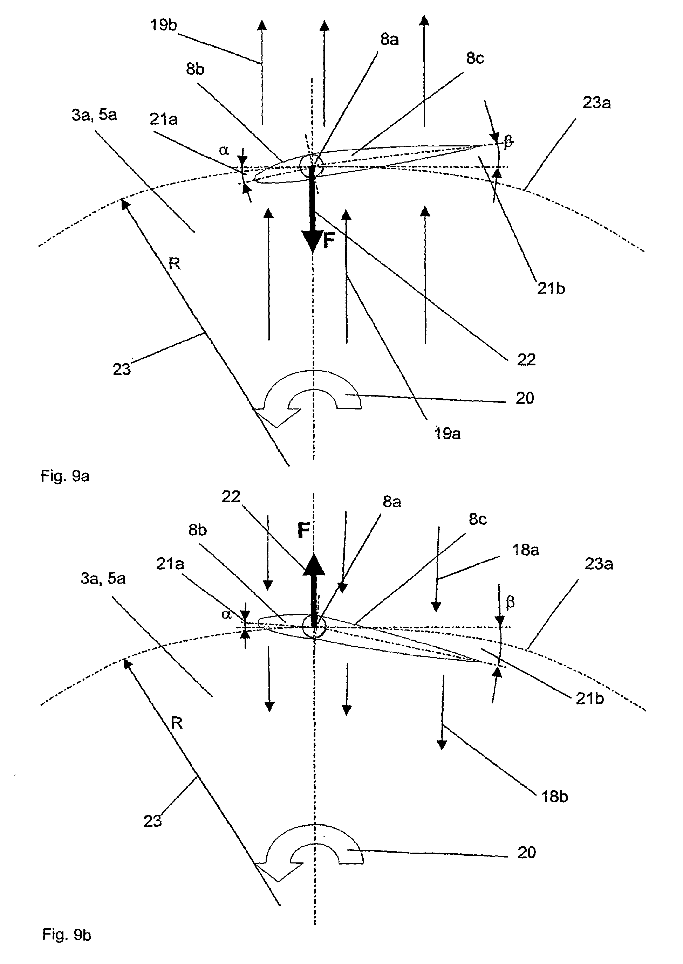

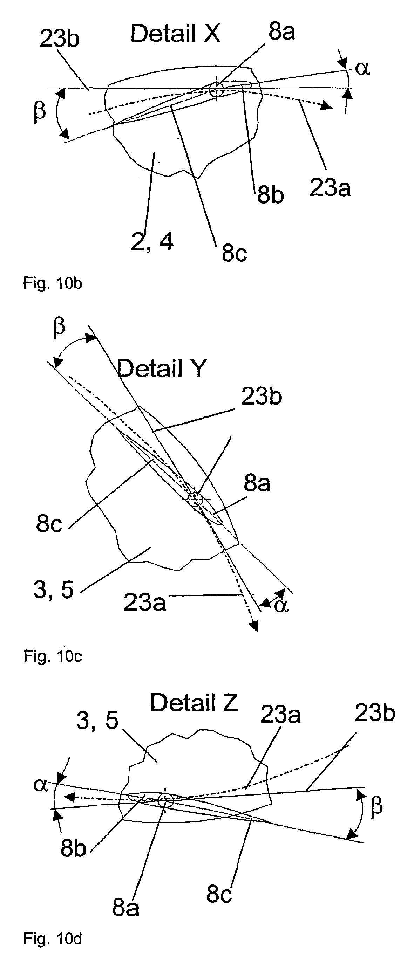

In Fig. 8 sind die Strömungsverhältnisse näher dargestellt, wobei aufgrund der Rotorblättergeometrie die Tragflügeltheorie maßgeblich ist, der zufolge jeweils unterhalb des angestellten Rotorblattes bei einer definierten Relativgeschwindigkeit eine Druckerhöhung und oberhalb ein Unterdruck erzeugt wird. Die entsprechenden Kraftkomponenten, die auf ein Rotorblatt einwirken, resultieren aus diesen beiden Druckkomponenten. Bei entsprechender Anstellung der Rotorblätter relativ zur Tangente 23b der Kreisbahn 23a während einer vollen Umdrehung der Auftriebskörper 2, 3, 4, 5 mit Nenndrehzahl wird Umgebungsluft bevorzugt von oben angesaugt 18a, in den rotierenden Auftriebskörper hineingepresst 18b, nach unten angesaugt 19a und hinausgepresst 19b. Eine optimale Ausführungsvariante ist in den Fig. 9, Fig. 9a und Fig. 9b dargestellt. Bei dieser Ausführungsvariante besteht das Rotorblatt 8 aus mindestens drei Elementen und zwar einer stabilen Schwenkachse 8a, einer beweglichen Rotorblattnase 8b und einer beweglichen Rotorblattspitze 8c. Für den Normalbetrieb sind die Rotorblattnase 8b um den Winkel α 21a, vorzugsweise um +/- 3° - 10° relativ zur Tangente der Kreisbahn 23a schwenkbar und die Rotorblattspitze 8c um den Winkel β 21b, vorzugsweise um +/- 3° bis 10° relativ zur Tangente der Kreisbahn 23a schwenkbar. Für den Sonderfall "Autorotation" sind Rotorblattspitze und Rotorblattnase um > 90°, vorzugsweise ca. 105° aus schwenkbar. Gemäß Fig. 9a ist eine vertikale Kraftkomponente Fa 22 in Richtung Drehachse 7 des Auftriebskörpers erzeugbar, wenn bei Nenndrehzahl in der oberen Extremposition die Rotorblattnase 8b mit dem Winkel α < 0° und die Rotorblattspitze mit dem Winkel β > 0°, jeweils bezogen auf die Tangentenrichtung 23b der Umlaufkreisbahn 23a, angestellt werden und vice versa gemäß Fig. 9b ist eine vertikale Kraftkomponente Fa 22 entgegen Richtung Drehachse 7 des Auftriebskörpers erzeugbar, wenn bei Nenndrehzahl in der oberen Extremposition die Rotorblattnase 8b mit dem Winkel α > 0° und die Rotorblattspitze mit dem Winkel β < 0°, jeweils bezogen auf die Tangentenrichtung 23b der Umlaufkreisbahn 23a, angestellt werden. In Fig. 10 sind die beiden gegenläufig angetriebenen Auftriebskörper mit den zur Erzeugung einer maximalen Auftriebskraft bei Nenndrehzahl optimalen Anstellungen der Rotorblätter in den unterschiedlichen Positionen im Detail dargestellt. Fig. 10a (Detail W von Fig. 10) zeigt die Winkelverhältnisse der Rotorblattnase und Rotorblattspitze beim Eintritt in die obere Umlaufbahn nach dem Verlassen der neutralen Vertikalposition, Fig. 10b (Detail X von Fig. 10) zeigt die Winkelverhältnisse der Rotorblattnase und Rotorblattspitze in der oberen Extremposition der Umlaufbahn, Fig. 10c (Detail Y von Fig. 10) zeigt die Winkelverhältnisse der Rotorblattnase und Rotorblattspitze in der oberen Umlaufbahn vor dem Eintritt in die neutrale Vertikalposition, Fig. 10d (Detail Z von Fig. 10) zeigt die Winkelverhältnisse der Rotorblattnase und Rotorblattspitze in der unteren Extremposition der Umlaufbahn.

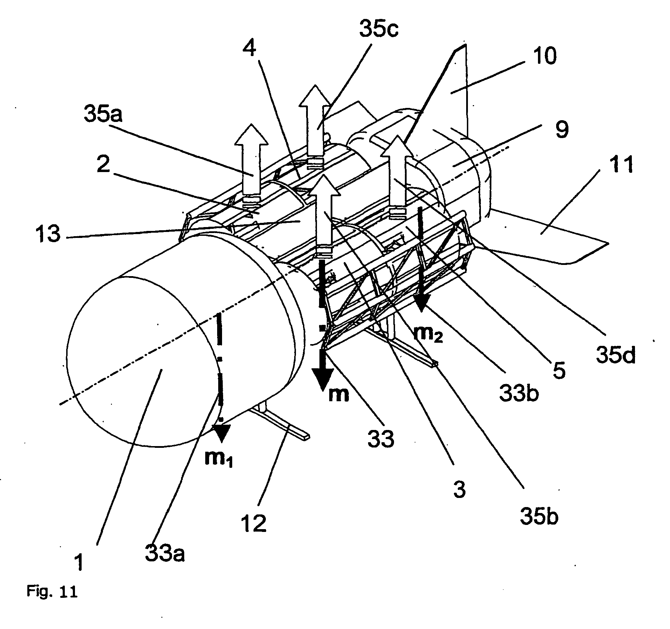

Eine stabile Gleichgewichtslage in Fig. 11 bis Fig. 12b in der Luft ist dadurch gegeben, dass jeder einzelne Auftriebskörper 2, 3, 4, 5 individuelle Auftriebskräfte A₁ bis A₄ 35a, 35b, 35c und 35d erzeugen kann und damit ein Gleichgewichtszustand zum Gesamtmassenschwerpunkt S 32 der Gesamtmasse m 33 bzw. zu den Hauptteilmassenschwerpunkten 32a der Teilmasse aus Pilotenkanzel m₁ 33a, mit dem Teilschwerpunktsabstand s₁ 34a, und 32b der Teilmasse aus dem rückwärtigen Bereich des Fluggerätes m₂ 33b, mit dem Teilschwerpunktsabstand s₂ 34b, und dem seitlichen Schwerpunktsabstand s₃ 34c des Gesamtmassenschwerpunkt S 32 der Gesamtmasse m 33 zu jeder Situation hergestellt werden kann. Damit kann jederzeit auch auf sich verändernde Gleichgewichtslagen reagiert werden.

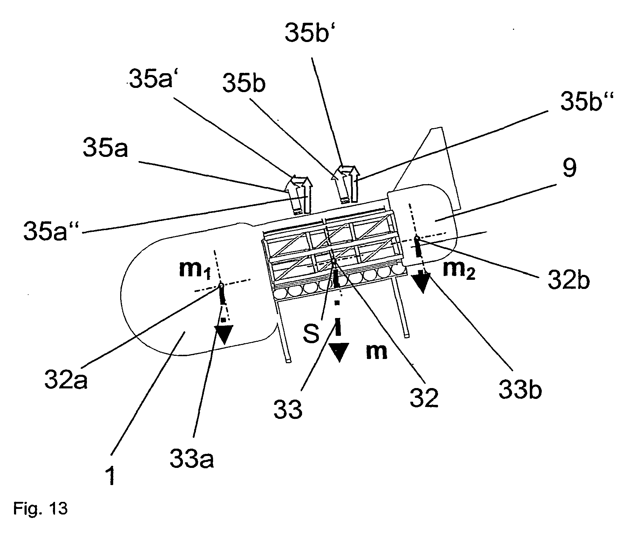

Nach Erreichen einer definierten Höhenposition, die mittels der rotierenden Auftriebskörper 2, 3, 4, 5 eingenommen werden kann, ist ein Übergang von einem Schwebezustand in eine langsame Vorwärtsbewegung bzw. Rückwärtsbewegung dadurch möglich, dass das Fluggerät eine Neigungslage (Fig. 13) einnimmt und aus der resultierenden Auftriebskraft 35a, 35b der Auftriebskörper eine Kraftkomponente 35a', 35b' abgeleitet werden kann, die eine Vorwärts- bzw. Rückwärtsbeschleunigung ermöglicht, während die vertikale Kraftkomponente 35a", 35b" das Fluggerät weiterhin vertikal im Gleichgewicht hält.

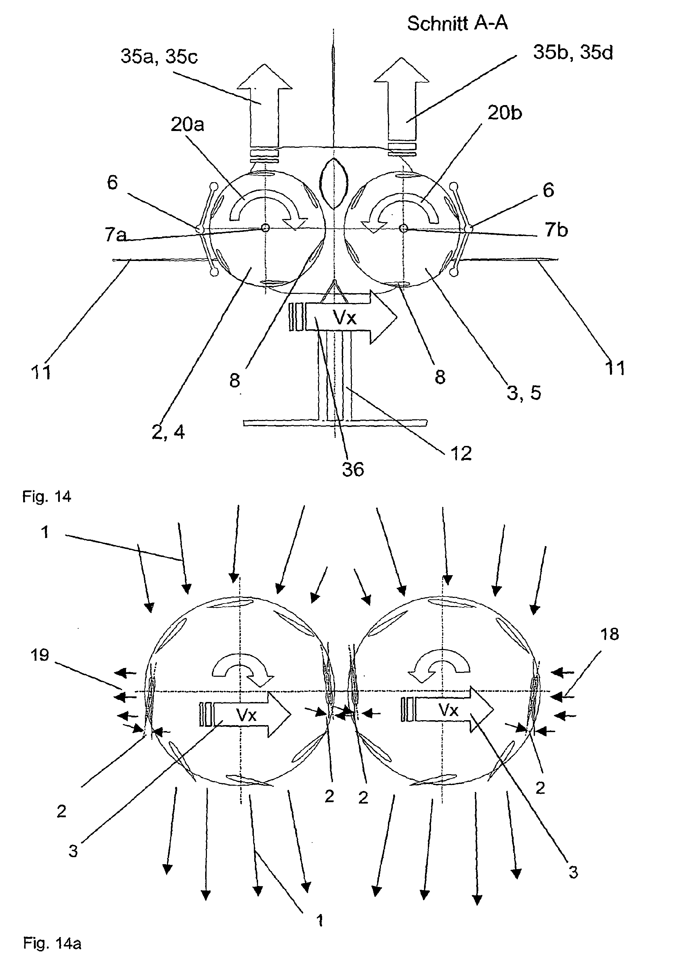

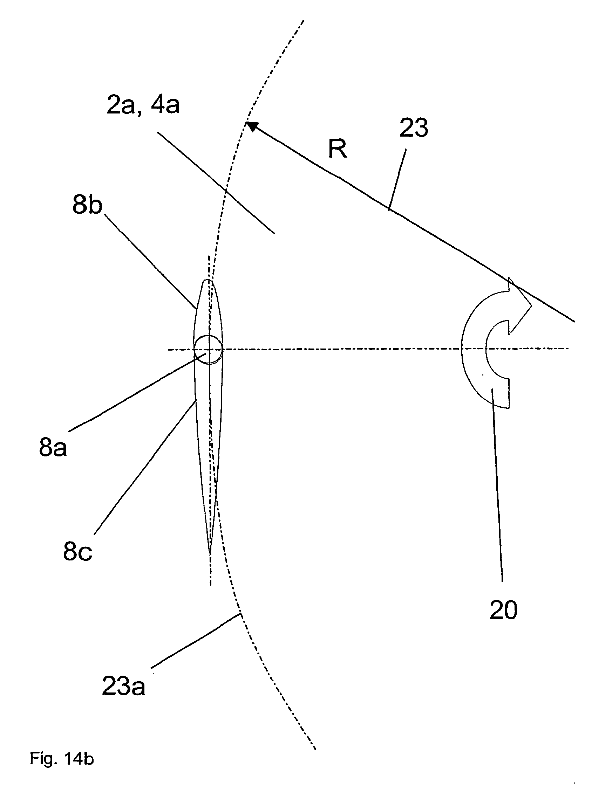

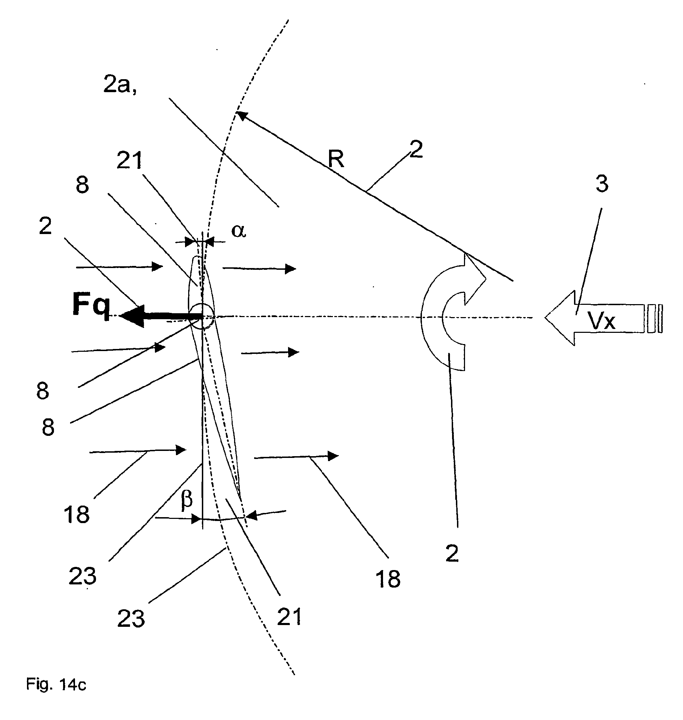

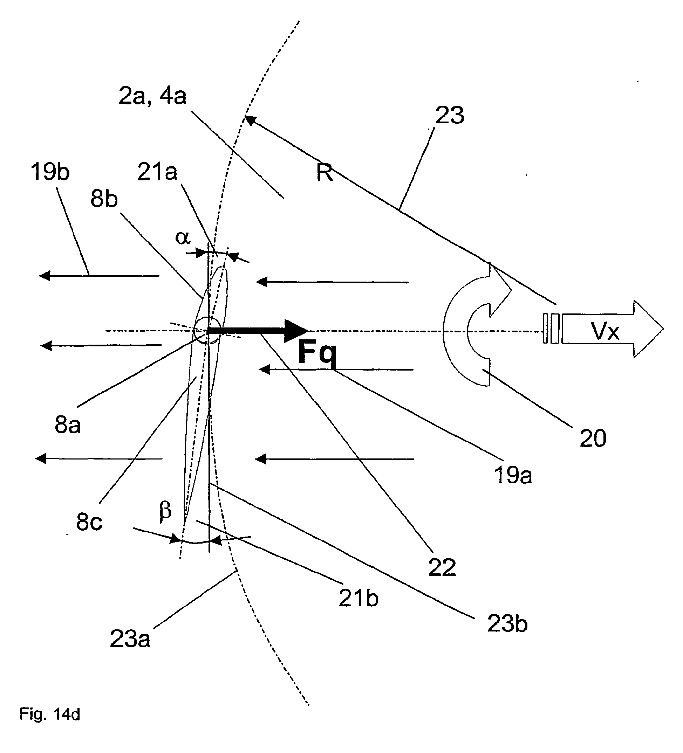

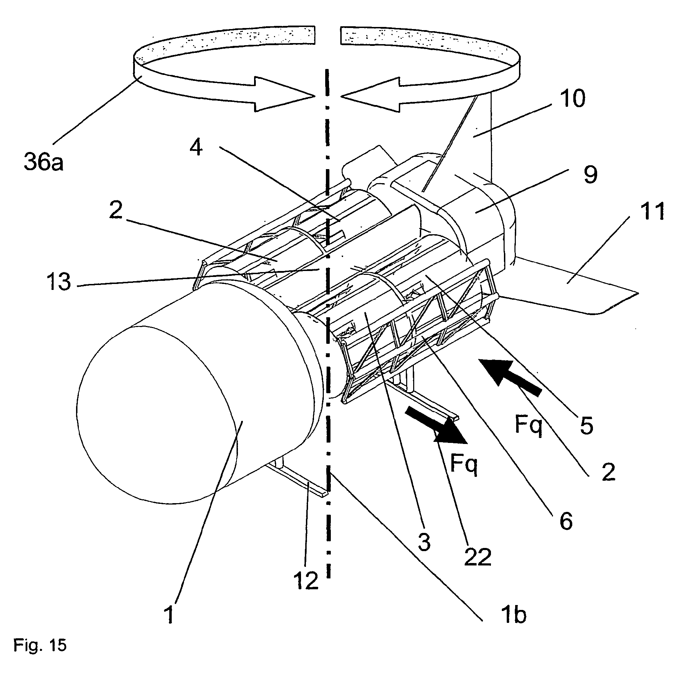

Eine Bewegung des Fluggerätes quer zur Längsachse ist im Schwebezustand durch eine spezielle Anstellung der Rotorblätter zur Tangentenrichtung 23b der Bewegungsbahn 23a der Rotorblätter möglich. In Fig. 14 ist eine Querbewegung mit der Geschwindigkeit vₓ 36 dargestellt, die dadurch erreicht wird, dass gemäß Fig. 14a die Rotorblätter in der Position der Vertikalen Extremlage in eine entsprechende Neigungslage 21 gebracht werden, sodass von einer Richtung Luft angesaugt 18a und quasi quer durch das Fluggerät ausgepresst 19b wird; auch hier ist die Tragflügeltheorie anzuwenden. In Fig. 14b ist die Rotorblattstellung in einer neutralen Lage dargestellt, während gemäß Rotorblattanstellung nach Fig. 14c auf das Fluggerät eine Kraftkomponente Fq 22 von der Drehachse weg ausgeübt werden würde und eine Bewegung mit der Geschwindigkeit vₓ 36 von rechts nach links zur Folge hätte und gem. Darstellung nach Fig. 14d auf das Fluggerät eine Kraftkomponente Fq 22 in entgegen gesetzter Richtung, in Richtung der Drehachse ausgeübt werden würde und eine Bewegung mit der Geschwindigkeit vₓ 36 von links nach rechts zur Folge hätte. Durch paarweise gegensinnige Erzeugung der Kraftkomponenten Fq 22 im vorderen und rückwärtigen Bereich des Auftriebskörpers gemäß Fig. 15, kann eine Drehbewegung 36a im Schwebezustand um die Vertikalachse 1b des Fluggerätes im bzw. gegen den Uhrzeigersinn erreicht werden.

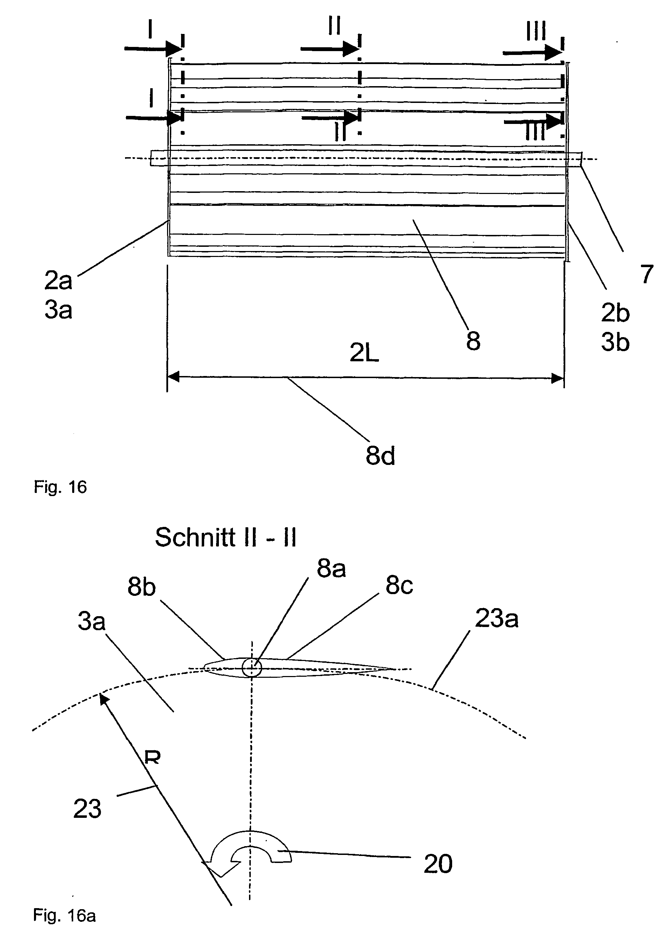

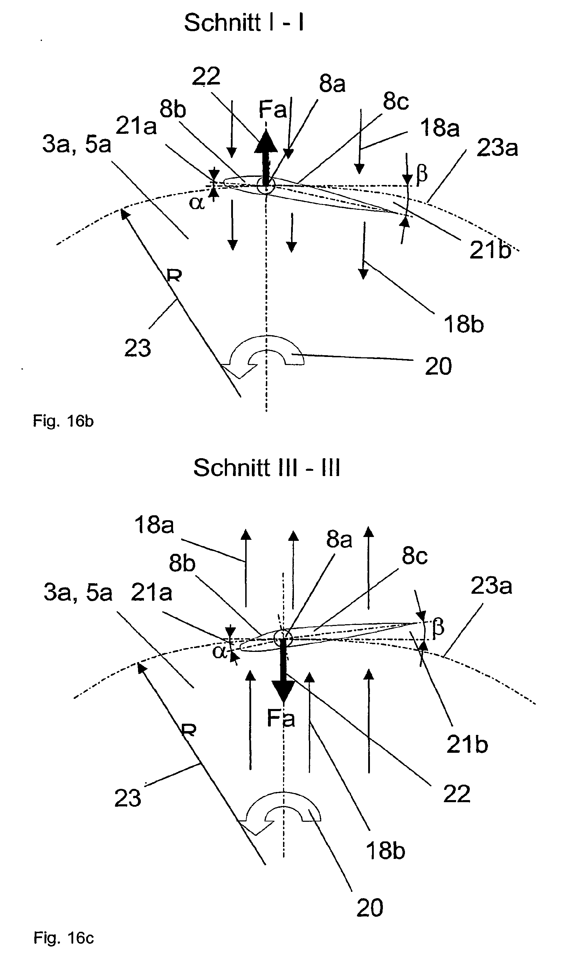

Die gleichen wie zuvor beschriebenen Effekte und Manöver lassen sich auch dann erreichen, wenn anstatt vier nur zwei paarweise gegenläufig angeordnete Auftriebskörper 2, 3 eingesetzt werden, die jedoch mit einer doppelten Länge 2L 8d ausgeführt werden (Fig. 16). Bei dieser Ausführungsvariante sind die Rotorblätter elastisch um die Schwenkachse 8a deformierbar. Die Rotorblattnase 8b und die Rotorblattspitze 8c können parallel an beiden Enden verschoben werden oder unterschiedlich. In Fig. 16a ist eine neutrale Lage des Rotorblattes (Schnitt II - II von Fig. 16) dargestellt, wie sie bei einer gegensinnigen Verschiebung der beiden Enden des Rotorblattes gem. Fig. 16b (Schnitt I - I von Fig. 16) und Fig. 16c (Schnitt III - III von Fig. 16) entsteht. Damit ist es möglich, bei einer Ausführungsvariante mit nur zwei gegensinnig rotierenden Auftriebskörpern, unterschiedliche Schwerpunktslagen im Flug zu korrigieren, Vorwärts- und Rückwärtsbewegungen mit geringer Fluggeschwindigkeit auszuführen und Drehbewegungen um die Vertikalachse ausführen zu können.

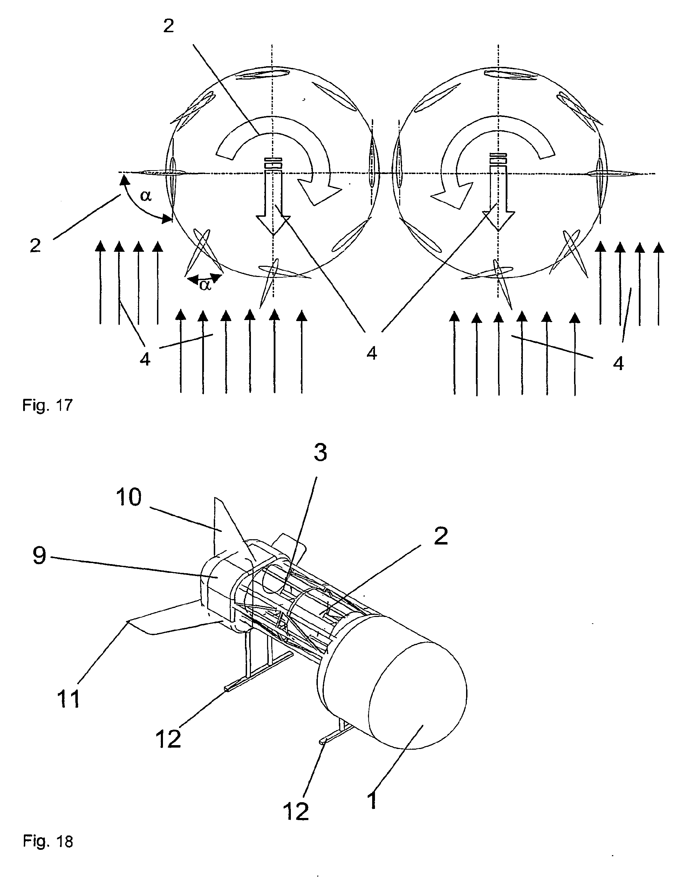

Bei genügend großer Verstellmöglichkeit der Schwenkbewegung des Rotorblattes ist im Sinkflug nach einem z. B. Ausfall eines Antriebsaggregates oberhalb einer kritischen Flughöhe eine Autorotation der Auftriebskörper und dadurch ein sicherer Landevorgang möglich. Fig. 17 zeigt die entsprechenden Anstellungswinkel α 21 der Rotorblätter und den Relativluftstrom 41 sowie die Rotationsrichtung 20 der Auftriebskörper, wenn das Fluggerät mit der Sinkgeschwindigkeit 40 im freien Fall in vertikaler Richtung nach unten fällt.

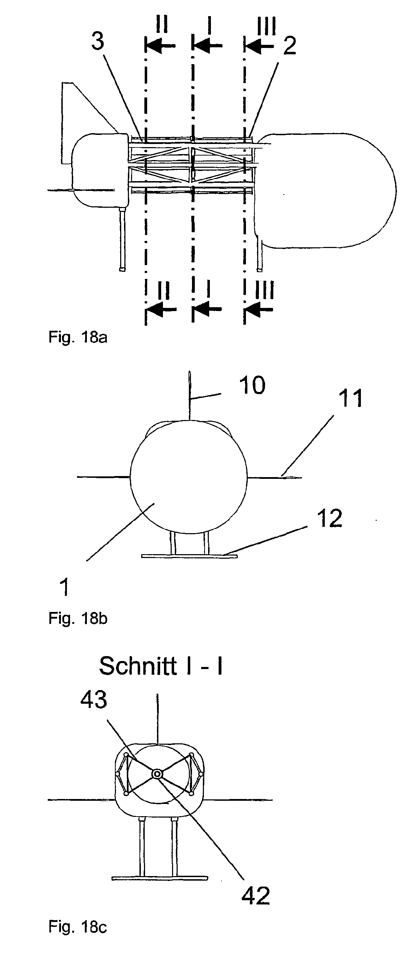

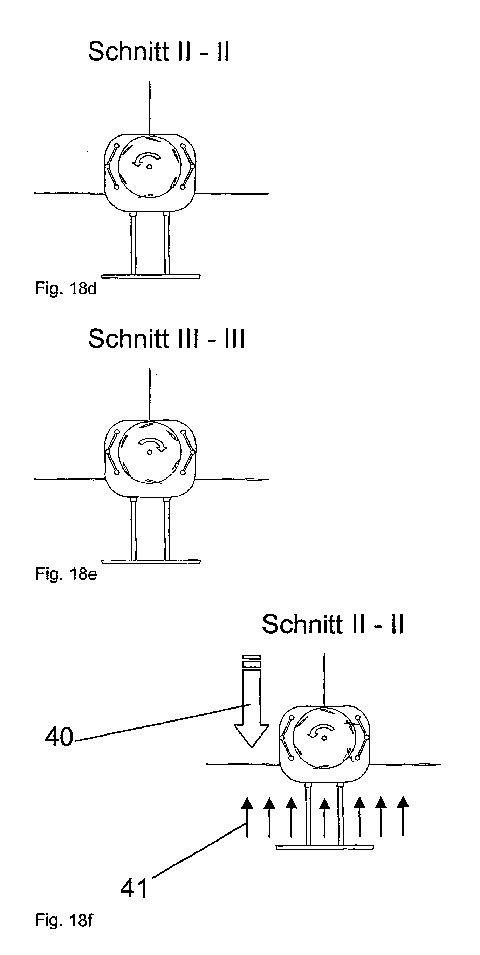

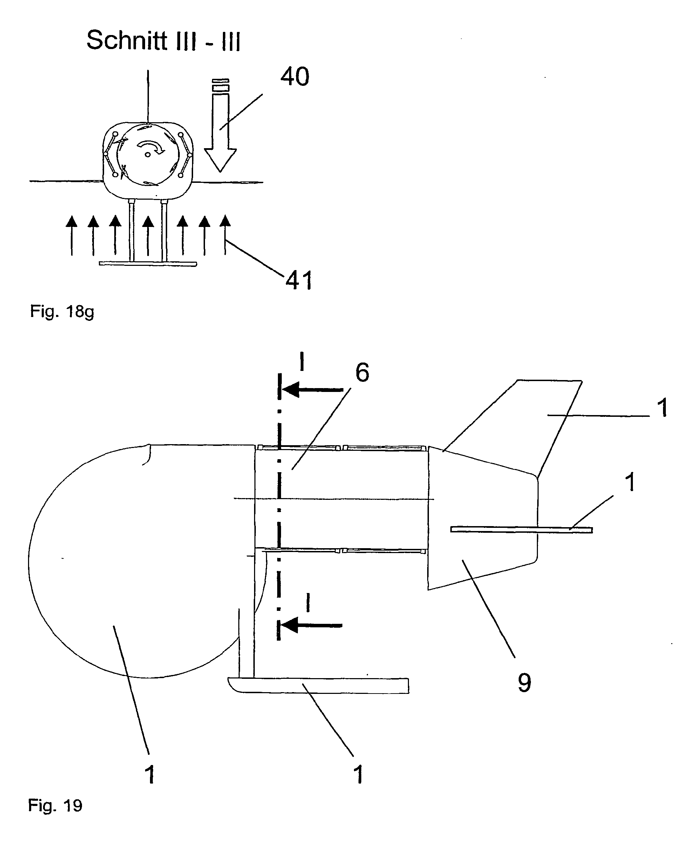

Eine weitere Ausführungsvariante eines Fluggerätes mit zwei gegensinnig rotierenden Auftriebskörpern 2, 3 ist in Fig. 18 dargestellt, wobei Fig. 18a eine Seitenansicht und Fig. 18b eine Frontansicht zeigt. Die beiden gegensinnig rotierenden Auftriebskörper sind entlang der Mittelachse des Fluggerätes entlang einer gemeinsamen Drehachse hintereinander angeordnet. Fig. 18c zeigt einen Schnitt I - I von Fig. 18a, worin die Lagerung der Drehachse der Auftriebskörper 2, 3 und die Seitenschutzverkleidung dargestellt sind. Fig. 18d zeigt den Schnitt II - II von Fig. 18a und Fig. 18e den Schnitt III - III von Fig. 18a woraus die Anordnung und Drehrichtung der beiden hintereinander liegenden Auftriebskörper ersichtlich sind, in der Darstellung für einen üblichen Schwebezustand bzw. Steigflug. Fig. 18f zeigt den Schnitt II - II von Fig. 18a und Fig. 18g zeigt den Schnitt III - III von Fig. 18a in der Stellung der Rotorblätter zur Erreichung der Autorotation im freien Sinkflug nach z. B. Ausfall eines Antriebsaggregates.

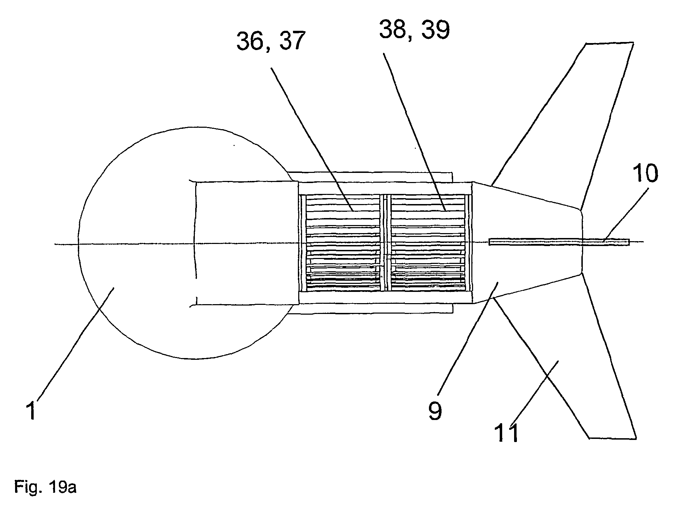

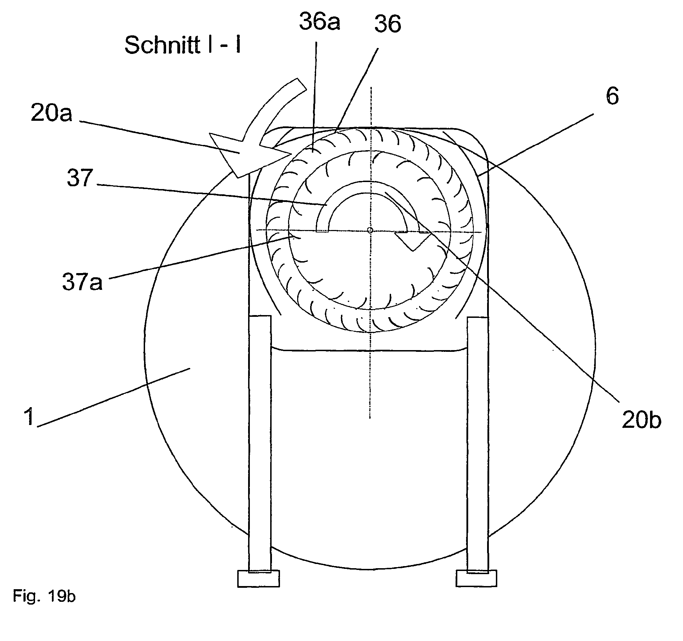

Fig. 19 zeigt eine weitere Ausführungsvariante eines Fluggerätes, geeignet für den vertikalen Start- und Landevorgang, ausgeführt jedoch mit Auftriebskörpern 36, 37, 38, 39, die als Querstromrotoren ausgebildet sind. Fig. 19a zeigt die Draufsicht eines derartigen Fluggerätes und Fig. 19b eine Darstellung gemäß Schnitt I - I von Fig. 19. Bei dieser Ausführungsvariante sind so genannte Querstromrotoren im Einsatz, die mit äußeren Strömungsleiteinrichtungen 6 versehen sind, die entsprechend verstellbar angeordnet sind und damit wiederum eine schier unbegrenzte Manövrierbarkeit (Vorwärtsbewegung, Rückwärtsbewegung, Querbewegung, Drehbewegung um die Vertikalachse) erreichen lassen. Diese Auftriebskörper 36, 37, 38, 39, ausgeführt als Querstromrotoren, bestehen aus jeweils zwei runden Endscheiben, die eine Vielzahl von Rotorflügeln 36a, 37a tragen und um eine Drehachse rotieren. In einer bevorzugten Ausführungsvariante sind zur Erhöhung von strömungstechnischen Wirkungsgraden, in jeweils einen äußeren Querstromrotor 36 ein innerer kleinerer Querstromrotor 37, mit gegenläufiger Drehrichtung, eingefügt.

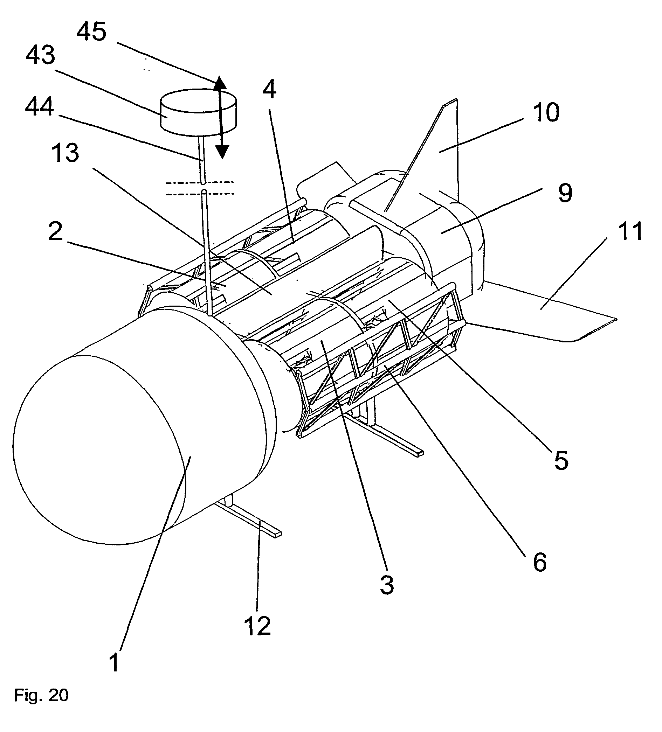

Bedingt durch die Tatsache, dass oberhalb des Fluggerätes keine rotierenden Aggregate vorhanden sind, ist dem Piloten im Bedarfsfall auch ein gefahrloses und sicheres Verlassen des Fluggerätes auch mittels Schleudersitz möglich. Weiters kann gemäß Fig. 20 oberhalb des Fluggerätes auch ein als Aufklärungsgerät 43 bezeichnetes Aggregat (Radar, optischer Sensor, ...) vorgesehen sein, welches bei Bedarf, im Schwebezustand des Fluggerätes, mittels einer flexiblen Verbindung 44 vertikal in die Höhe verbracht und anschließend wieder eingezogen werden kann. Dies ist u. a. dann sinnvoll, wenn mit dem Fluggerät im militärischen Einsatz ein Unterfliegen feindlicher Radarstrahlen hinter schützender Deckungen im Gelände oder in Gebäudefluchten erreicht werden soll, und zur Erfassung der militärischen Situation z. B. hinter einer schützenden Geländeformation, anstatt eines kurzfristigen gefahrvollen "Auftauchens" nur das Aufklärungsgerät 43 vertikal in die Höhe geschossen, die militärische Situation erfasst und anschließend das Aufklärungsgerät mit der flexiblen Verbindung wieder sicher in den Rumpf des Fluggerätes eingebracht wird.

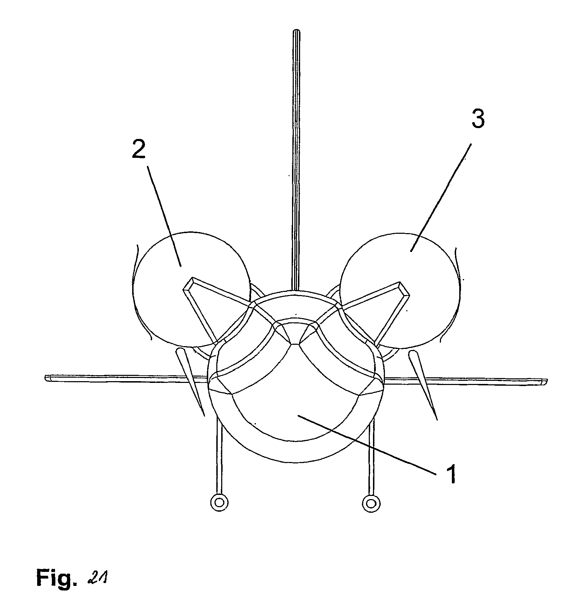

Das Fluggerät der Fig. 21 besteht aus einem Rumpf 1 mit einer Längsachse 1a und zwei oberhalb dieser Längsachse 1a angeordneten Querstromrotoren 2 und 3. Im hinteren Bereich des Rumpfes sind in an sich üblicher Weise ein Höhenleitwerk 11 und ein Seitenleitwerk 10 vorgesehen. Kufen 46 stützen das Fluggerät am Boden ab. Hinter den Querstromrotoren 2, 3 sind im Bereich der Leitwerke 4, 5 zwei Mantelstromtriebwerke 47 vorgesehen, um den nötigen Vortrieb zu erzeugen.

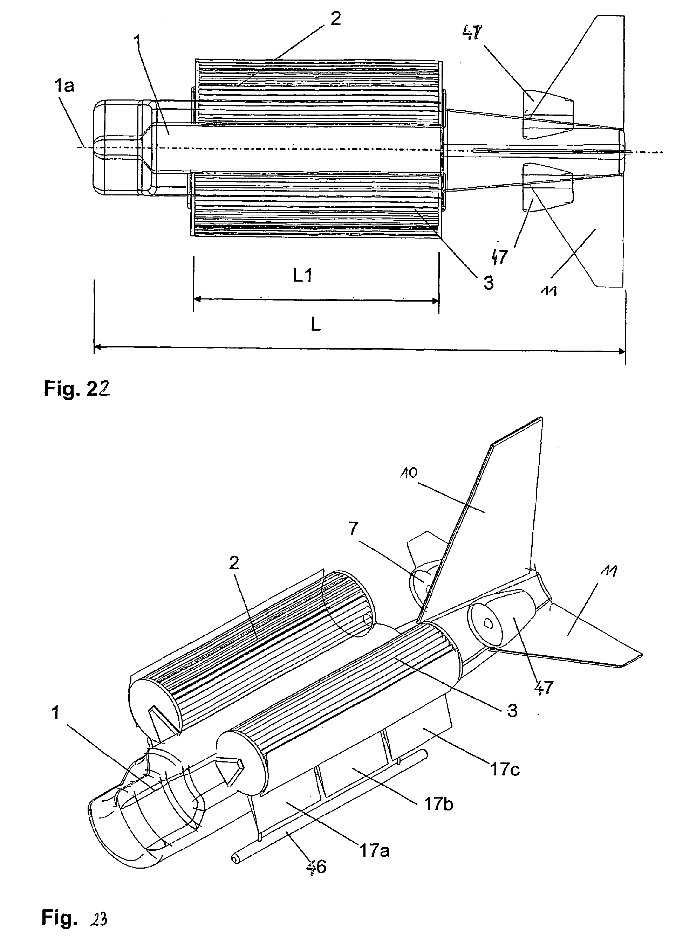

Aus Fig. 22 ist ersichtlich, dass die Länge L1 der Querstromrotoren 2, 3 etwa 50% der Länge L des gesamten Fluggerätes entspricht.

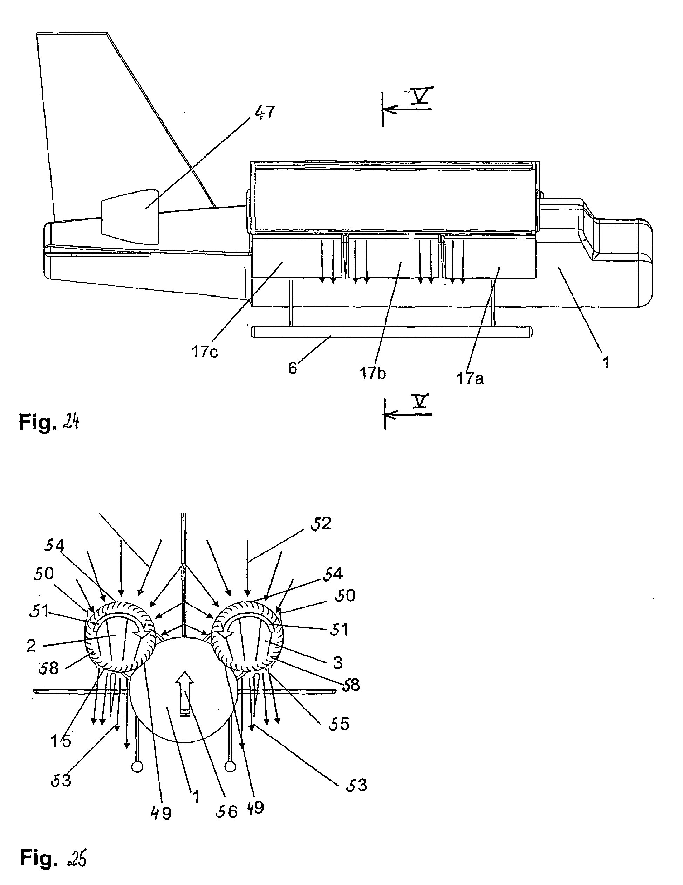

In Fig. 25 ist der Aufbau des Fluggerätes in größerer Detaillierung im Schnitt dargestellt. Die Rotoren 2, 3 besitzen eine Vielzahl von Schaufeln 8, die entlang des Umfanges angeordnet sind. Am Umfang sind die Rotoren 2, 3 jeweils durch eine erste Leitfläche 49 und eine zweite Leitfläche 50 abgedeckt. Dabei ist die erste Leitfläche 49 als Teil der Außenfläche des Rumpfes 1 ausgebildet, während die zweite Leitfläche 50 jeweils als Strömungsleitblech ausgebildet ist. Durch die Drehung der Querstromrotoren 2, 3 im Sinne der Pfeile 51 wird eine Luftströmung induziert, so dass Luft entlang der Pfeile 52 angesaugt wird und in Richtung der Pfeile 53 ausgestoßen wird. Der obere offene Bereich der Rotoren 2, 3 dient somit als Lufteinlassöffnung 54, und der untere offene Bereich als Luftauslassöffnung 55. Durch den Impuls der nach unten ausgestoßenen Luftmengen ergibt sich insgesamt eine Auftriebskraft auf das Fluggerät, die durch den Pfeil 56 dargestellt ist und die bei entsprechender Auslegung ausreicht, das Fluggerät vom Boden abzuheben.

Unterhalb der Rotoren 2, 3 sind verstellbare Leitschaufeln 17 vorgesehen, die bei den Ausführungsvarianten der Fig. 24 aus mehreren Segmenten 17a, 17b, 17c bestehen, die unabhängig voneinander um eine zur Längsachse des Fluggerätes parallelen Achse schwenkbar sind. Dadurch kann durch die Leitschaufeln 17 auch eine Drehung des Fluggerätes um eine Vertikalachse 1b bewirkt werden. Es ist gezeigt, dass die unterhalb der Luftausstoßöffnungen 55 angeordneten Leitschaufeln 17 die Richtung der Luftstrahlen im Sinne der Pfeile 53 entsprechend abgeändert werden kann. In der in Fig. 6 gezeigten Stellung wird durch Verschwenkung der beweglichen Leitschaufeln 17 eine Kraftkomponente nach Backbord erzeugt, was durch den Pfeil 56 angedeutet ist. Innerhalb der Querstromrotoren können Leitschaufeln 58 zur verbesserten Luftströmungsführung vorgesehen sein. Die Leitschaufeln 58 können beweglich ausgeführt sein, was die Manövrierfähigkeit bei hohem Wirkungsgrad verbessert.

Der Antrieb der Querstromrotoren 2, 3 kann im Prinzip durch Kolbenmotoren erfolgen, wird jedoch bevorzugt über Gasturbinen durchgeführt, was in den Zeichnungen nicht dargestellt ist.

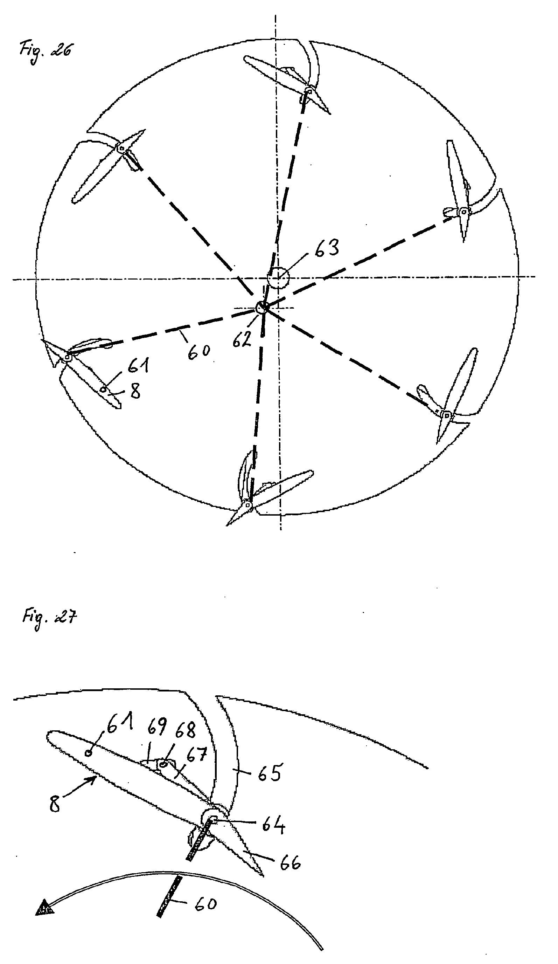

Aus Fig. 26 ist ersichtlich, dass die einzelnen Rotorblätter 8 über eine Zugstange 60 um einen Drehpunkt 61 schwenkbar angeordnet sind. Die Zugstangen 60 sind in einem gemeinsamen Sternpunkt 62 gelagert, der beliebig gegenüber der Achse 63 verschoben werden kann. Dadurch kann eine Gesamtströmung in beliebiger Richtung eingestellt werden. Die Rotorblätter 8 sind über Zapfen 64 in Kulissen 65 geführt, um die entsprechende Stabilität zu gewährleisten.

Aus Fig. 27 ist erkennbar, dass ein Endbereich 66 des Rotorblatts 8 separat verstellbar ist. Ein mit dem Endbereich 66 verbundener Hebel 67 besitzt einen Zapfen 68, der in einer zweiten Kulisse 69 geführt ist, so dass das Rotorblatt 8 ein asymmetrisches Tragflügelprofil annimmt, was die Förderleistung und den Wirkungsgrad verbessert. Je stärker das Rotorblatt 8 insgesamt angestellt wird, um so stärker ist auch die zusätzliche Anstellung des Endbereichs 66 und damit die Gesamtprofilierung des Rotorblatts 8.

Die vorliegende Erfindung beschreibt ein Fluggerät, welches die Möglichkeit eines senkrechten Starts und einer senkrechten Landung aufweist, eine fast unbegrenzte Manövrierbarkeit im Schwebezustand erlaubt, eine hohe Reisegeschwindigkeit bei gleichzeitiger Treibstoffökonomie bietet, dem Piloten im Bedarfsfall ein sicheres Verlassen des Fluggerätes ermöglicht und ein flexibel angeordnetes Aufklärungsgerät oberhalb des Fluggerätes unterbringt.

## Patentansprüche

1. Fluggerät mit einem Rumpf (1) und mindestens zwei am Rumpf (1) angebrachten Auftriebskörpern (2, 3, 4, 5), die im Wesentlichen hohlzylindrisch ausgebildet sind und die eine Vielzahl von tragflügelähnlich ausgebildeter Rotorblätter (8) aufweisen, die sich über den Umfang der Auftriebskörper (2, 3, 4, 5) erstrecken und beweglich um ihre Längsachse schwenkbar angeordnet sind, wobei der Umfang der Auftriebskörper (2, 3, 4, 5) durch mindestens eine Leitfläche (49, 50) teilweise abgedeckt ist, und wobei die Auftriebskörper (2, 3, 4, 5) jeweils eine Zylinderachse (7a, 7b) aufweisen, die im Wesentlichen parallel zu einer Längsachse (1a) des Fluggerätes sind, und durch mindestens ein Antriebsaggregat zur Rotation um ihre Längsachse (7a, 7b) angetrieben werden, **dadurch gekennzeichnet, dass** die Rotorblätter (8) zweiteilig (8b, 8c) ausgeführt sind und hintere Teile (8c) aufweisen, die unabhängig von vorderen Teilen (8b) um eine Schwenkachse (8a) beweglich sind, und dass bei Rotation der Auftriebskörper (2, 3, 4, 5) um ihre Längsachse eine Schwenkbewegung der hinteren Teile der Rotorblätter (8) unabhängig von den vorderen Teilen stattfindet.

2. Fluggerät nach Anspruch 1, **dadurch gekennzeichnet, dass** der Umfang des Rotors durch eine erste Leitfläche (49) und eine zweite Leitfläche (50) teilweise abgedeckt ist, so dass zwischen diesen Leitflächen (49, 50) eine Lufteinlassöffnung (14) und eine Luftauslassöffnung (15) gebildet werden, und dass eine Leitfläche (49, 50) zumindest teilweise von einer Außenfläche des Rumpfes (1) gebildet ist.

3. Fluggerät nach Anspruch 1 oder 2, **dadurch gekennzeichnet, dass** die Auftriebskörper (2, 3, 4, 5) oberhalb der Schwerpunktslage des Fluggerätes angeordnet sind.

4. Fluggerät nach einem der Ansprüche 1 bis 3, **dadurch gekennzeichnet, dass** die Auftriebskörper (2, 3, 4, 5) durch Gasturbinen gegenläufig angetrieben hohlzylindrisch ausgebildet sind.

5. Fluggerät nach einem der Ansprüche 1 bis 4, **dadurch gekennzeichnet, dass** für eine hohe Reisegeschwindigkeit zusätzliche Triebwerke (47) vorgesehen sind, die vorzugsweise schwenkbar ausgeführt sind, um eine zusätzliche Unterstützung beim Start, bei der Landung oder bei sonstigen Manövern zu ermöglichen.

6. Fluggerät nach einem der Ansprüche 1 bis 5, **dadurch gekennzeichnet, dass** das Fluggerät mit zwei Auftriebskörpern (2, 3) ausgeführt ist, die entlang der Längsachse (1a) des Fluggerätes hintereinander liegend, gegenläufig rotierend angeordnet sind.

7. Fluggerät nach einem der Ansprüche 1 bis 5, **dadurch gekennzeichnet, dass** das Fluggerät mit zwei Auftriebskörpern (2, 3) ausgeführt ist, deren Mittelachsen parallel nebeneinander liegen.

8. Fluggerät nach einem der Ansprüche 1 bis 5, **dadurch gekennzeichnet, dass** das Fluggerät mit vier Auftriebskörper (2, 3, 4, 5) ausgeführt ist, wobei jeweils zwei Auftriebskörper (2, 3, 4, 5) gegenläufig rotieren und parallel zueinander angeordnet sind.

9. Fluggerät nach einem der Ansprüche 1 bis 8, **dadurch gekennzeichnet, dass** im Inneren der Auftriebskörper (2, 3, 4, 5) jeweils mindestens eine Leitschaufel (18) vorgesehen ist, die vorzugsweise verstellbar ausgebildet ist.

10. Fluggerät nach einem der Ansprüche 1 bis 14, **dadurch gekennzeichnet, dass** im Bereich von Luftauslassöffnungen (15) verstellbare Leitschaufeln (17) vorgesehen sind, die aus zwei, vorzugsweise aus drei Segmenten (17a, 17b, 17c) bestehen, um eine Rotation um eine Vertikalachse (1b) zu ermöglichen.

11. Fluggerät nach einem der Ansprüche 1 bis 10, **dadurch gekennzeichnet, dass** unterhalb der Auftriebskörper (2, 3, 4, 5) weitere verstellbare Leitschaufeln (17) vorgesehen sind, die eine Vorwärts- bzw. eine Rückwärtsbewegung im Schwebezustand erlauben.

12. Fluggerät nach einem der Ansprüche 1 bis 11, **dadurch gekennzeichnet, dass** die Rotorblätter (8) der einzelnen Auftriebskörper (2, 3, 4, 5) individuell verstellbar sind, um Auftriebskräfte und Seitenkräfte erzeugen zu können, sowie um unterschiedliche Schwerpunktlagen ausgleichen zu können.

13. Fluggerät nach einem der Ansprüche 1 bis 12, **dadurch gekennzeichnet, dass** die Auftriebskörper (2, 3, 4, 5) mit Abdeckungen (40, 41) versehen sind, ausgeführt als kompakte Abdeckungen oder als ein System von Lamellen, die einerseits einen ungehinderten Luftdurchlass gewährleisten und für eine hohe Reisegeschwindigkeit, wo der Wirkungsgrad der Auftriebskörper (2, 3, 4, 5) begrenzt ist, die Strömungsverluste reduzieren.

14. Fluggerät nach einem der Ansprüche 1 bis 13, **dadurch gekennzeichnet, dass** die Auftriebskörper (2, 3, 4, 5) seitlich eine Schutzverkleidung (6) aufweisen, die einen ungehinderten Luftdurchlass gewährleisten, im Bedarfsfall jedoch den rotierenden Auftriebskörper (2, 3, 4, 5) gegen Kollision mit einem festen Hindernis schützen.

## Claims

1. An aircraft comprising a fuselage (1) and at least two essentially lifting bodies (2, 3, 4, 5) which are applied to the fuselage (1), are arranged in a substantially hollow-cylindrical way and comprise a plurality of rotor blades (8) which are arranged in the manner of wings and extend beyond the circumference of the lifting bodies (2, 3, 4, 5) and are movably arranged in a swivelable manner about their longitudinal axis, with the circumference of the lifting bodies (2, 3, 4, 5) being partially covered by at least one tail surface (49, 50), with the lifting bodies (2, 3, 4, 5) each comprising a cylindrical axis (7a, 7b) which is essentially parallel to a longitudinal axis (1a) of the aircraft and are driven to rotate about their longitudinal axis (7a, 7b) by at least one drive unit, **characterized in that** the rotor blades (8) are provided with a bipartite arrangement (8b, 8c) and have rear parts (8c) which are movable about a swiveling axis (8a) independent of the front parts (8b), and that during the rotation of the lifting bodies (2, 3, 4, 5) about their longitudinal axis a swiveling movement of the rear parts of the rotor blades (8) occurs independent of the front parts.

2. An aircraft according to claim 1, **characterized in that** the circumference of the rotor is partly covered by a first tail surface (49) and a second tail surface (50), so that an air intake opening (14) and an air outlet opening (15) is formed between these tail surfaces (49, 50), and that a tail surface (49, 50) is formed at least partly by an outside surface of the fuselage (1).

3. An aircraft according to claim 1 or 2, **characterized in that** the lifting bodies (2, 3, 4, 5) are arranged above the center-of-gravity position of the aircraft.

4. An aircraft according to one of the claims 1 to 3, **characterized in that** the lifting bodies (2, 3, 4, 5) are arranged in a hollow-cylindrical way and driven in opposite directions by gas turbines.

5. An aircraft according to one of the claims 1 to 4, **characterized in that** additional propulsive units (47) are provided for a high cruising speed, which propulsive units are provided with a pivoting configuration in order to enable additional support during take-off, landing and other maneuvers.

6. An aircraft according to one of the claims 1 to 5, **characterized in that** the aircraft is configured with two lifting bodies (2, 3) which are arranged behind one another along the longitudinal axis (1a) of the aircraft and rotate in opposite directions.

7. An aircraft according to one of the claims 1 to 5, **characterized in that** the aircraft is configured with two lifting bodies (2, 3) whose central axes are situated parallel next to each other.

8. An aircraft according to one of the claims 1 to 5, **characterized in that** the aircraft is configured with four lifting bodies (2, 3, 4, 5), with two lifting bodies (2, 3, 4, 5) each rotating in opposite directions and being arranged parallel with respect to each other.

9. An aircraft according to one of the claims 1 to 8, **characterized in that** at least one guide blade (18) each is provided in the interior of the lifting bodies (2, 3, 4, 5), which guide blade is preferably configured to be adjustable.

10. An aircraft according to one of the claims 1 to 14, **characterized in that** adjustable guide blades (17) are provided in the region of the air outlet openings (15), which guide blades consist of two, preferably three segments (17a, 17b, 17c) in order to enable a rotation about a vertical axis (1b).

11. An aircraft according to one of the claims 1 to 10, **characterized in that** further adjustable guide blades (17) are provided beneath the lifting bodies (2, 3, 4, 5) which allow a forward or backward movement in the hovering state.

12. An aircraft according to one of the claims 1 to 11, **characterized in that** the rotor blades (8) of the individual lifting bodies (2, 3, 4, 5) are individually adjustable in order to enable the generation of lifting and lateral forces and in order to enable the compensation of different center-of-gravity positions.

13. An aircraft according to one of the claims 1 to 12, **characterized in that** the lifting bodies (2, 3, 4, 5) are provided with coverings (40, 41) configured as compact covers or a system of lamellae, which on the one hand ensure an unhindered passage of air and reduce flow losses for a high cruising speed where the efficiency of the lifting bodies (2, 3, 4, 5) is reduced.

14. An aircraft according to one of the claims 1 to 13, **characterized in that** the lifting bodies (2, 3, 4, 5) are provided on the side with a protective covering (6) which allows an unobstructed passage of air, but if necessary will protect the rotating lifting bodies (2, 3, 4, 5) against collision with a solid obstruction.

## Revendications

1. Aéronef comportant un corps (1) et au moins deux organes de poussée ascensionnelle (2, 3, 4, 5) installés sur le corps (1), ces organes étant pratiquement en forme de cylindres creux, comportant plusieurs pales de rotor (8) en forme de surfaces portantes, s'étendant sur la périphérie des organes de poussée ascensionnelle (2, 3, 4, 5) en étant mobiles en pivotement autour de leur axe longitudinal,
la périphérie des organes de poussée ascensionnelle (2, 3, 4, 5) étant partiellement couverte par au moins une surface de guidage (49, 50) et les organes de poussée ascensionnelle (2, 3, 4, 5) ayant chacun un axe de cylindre (7a, 7b) pratiquement parallèle à l'axe longitudinal (1a) de l'Aéronef et ils sont entraînés par au moins un groupe d'entraînement pour tourner autour de leur axe longitudinal (7a, 7b),
**caractérisé en ce que**
les pales de rotor (8) sont en deux parties (8b, 8c), les parties arrière (8c) étant indépendantes en mouvement des parties avant (8b) autour d'un axe de pivotement (8a) ? et
lors de la rotation de l'organe de poussée ascensionnelle (2, 3, 4, 5) autour de son axe longitudinal, il y a un mouvement de pivotement des parties arrière des pales de rotor (8) indépendamment de celui des parties avant.

2. Aéronef selon la revendication 1,
**caractérisé en ce que**
la périphérie du rotor est partiellement couverte par une première surface de guidage (49) et une seconde surface de guidage (50) de façon à former une entrée d'air (14) et une sortie d'air (15) entre les surfaces de guidage (49, 50) et
une surface de guidage (49, 50) est formée au moins en partie par une surface extérieure du corps (1).

3. Aéronef selon la revendication 1 ou 2,
**caractérisé en ce que**
les organes de poussée ascensionnelle (2, 3, 4, 5) sont installés au-dessus de la position du centre de gravité de l'aéronef.

4. Aéronef selon l'une des revendications 1 à 3,
**caractérisé en ce que**
les organes de poussée ascensionnelle (2, 3, 4, 5) sont réalisés sous la forme de cylindres creux entraînés en sens opposé par des turbines à gaz.

5. Aéronef selon l'une des revendications 1 à 4,
**caractérisé en ce que**
des moteurs (47) supplémentaires sont prévus pour une vitesse de croisière élevée, ces moteurs étant de préférence pivotants pour offrir une assistance supplémentaire au décollage, à l'atterrissage ou pour d'autres manoeuvres.

6. Aéronef selon l'une des revendications 1 à 5,
**caractérisé en ce que**
l'aéronef est équipé de deux organes de poussée ascensionnelle (2, 3) installés l'un derrière l'autre suivant sont axe longitudinal (1a) et tournant en sens opposé.

7. Aéronef selon l'une des revendications 1 à 5,
**caractérisé en ce qu'**
il est équipé de deux organes de poussée ascensionnelle (2, 3) dont les axes sont parallèles et juxtaposés.

8. Aéronef selon l'une des revendications 1 à 5,
**caractérisé en ce qu'**
il est équipé de quatre organes de poussée ascensionnelle (2, 3, 4, 5) et chaque fois deux organes de poussée ascensionnelle (2, 3, 4, 5) tournent en sens opposé et sont installés en parallèle l'un par rapport à l'autre.

9. Aéronef selon l'une des revendications 1 à 8,
**caractérisé par**
au moins une aube directrice (18), de préférence réglable à l'intérieur de chacun des organes de poussée ascensionnelle (2, 3, 4, 5).

10. Aéronef selon l'une des revendications 1 à 9,
**caractérisé en ce que**
dans la région des orifices de sortie d'air (15) il y a des pales directrices (17) réglables, formées de deux ou de préférence trois segments (17a, 17b, 17c) pour permettre une rotation autour d'un axe vertical (1b).

11. Aéronef selon l'une des revendications 1 à 10,
**caractérisé par**
d'autres aubes de guidage (17), réglables, installées sous les organes de poussée ascensionnelle (2, 3, 4, 5), permettent un mouvement d'avancée ou de recul en position de flottement.

12. Aéronef selon l'une des revendications 1 à 11,
**caractérisé en ce que**
les pales de rotor (8) des différents organes de poussée ascensionnelle (2, 3, 4, 5) sont réglables individuellement pour générer des forces de poussée ascensionnelle et des forces latérales et compenser des positions différentes du centre de gravité.

13. Aéronef selon l'une des revendications 1 à 12,
**caractérisé en ce que**
les organes de poussée ascensionnelle (2, 3, 4, 5) sont munis de capots (40, 41) réalisés sous la forme de capots compacts ou sous la forme d'un système de lamelles, qui permettent un passage de l'air sans créer d'obstacle et réduisent les pertes aérauliques pour une vitesse de croisière élevée, le rendement des organes de poussée ascensionnelle (2, 3, 4, 5) étant alors limité.

14. Aéronef selon l'une des revendications 1 à 13,
**caractérisé en ce que**
les organes de poussée ascensionnelle (2, 3, 4, 5) ont latéralement un habillage protecteur (6) permettant un passage libre de l'air, en protégeant néanmoins le cas échéant les organes de poussée ascensionnelle (2, 3, 4, 5) en rotation contre une collision avec un obstacle fixe.
